(19) Europäisches Patentamt / European Patent Office / Office européen des brevets

(11) **EP 4 658 592 B1**

(12) **EUROPEAN PATENT SPECIFICATION**

(45) Date of publication and mention
of the grant of the patent:
**13.05.2026  Bulletin 2026/20**

(21) Application number: **24734974.9**

(22) Date of filing: **04.06.2024**

(51) International Patent Classification (IPC):
**B65H 18/10** (2006.01)   **E01C 3/06** (2006.01)
**A01G 9/029** (2018.01)   **A01G 9/033** (2018.01)
**A01G 9/02** (2018.01)   **B65H 75/24** (2006.01)
**D04H 1/558** (2012.01)   **E02D 17/20** (2006.01)
**E02D 29/02** (2006.01)   **E02B 3/12** (2006.01)

(52) Cooperative Patent Classification (CPC):
**E01C 3/06; A01G 9/028; A01G 9/029; A01G 9/033;
B65H 18/10; B65H 75/243; B65H 75/249;
D04H 1/558; E02D 17/202; E02D 29/0241;**
B65H 2404/411; B65H 2404/412;
B65H 2701/12213; B65H 2701/1922; E02B 3/126

(86) International application number:
**PCT/IB2024/055427**

(87) International publication number:
**WO 2025/017380 (23.01.2025 Gazette 2025/04)**

(54) **WINDING APPARATUS FOR WINDING A ROLL OF A THREE-DIMENSIONAL NONWOVEN GEOTEXTILE**

WICKELVORRICHTUNG ZUM WICKELN EINER ROLLE EINES DREIDIMENSIONALEN GEOTEXTILVLIESSTOFFES

APPAREIL D'ENROULEMENT POUR ENROULER UN ROULEAU D'UN GÉOTEXTILE NON TISSÉ TRIDIMENSIONNEL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **17.07.2023  PCT/SA2023/050006**

(43) Date of publication of application:
**10.12.2025  Bulletin 2025/50**

(73) Proprietor: **Industrial Specialized Innovations Co.
46478 Yanbu (SA)**

(72) Inventor: **AL SALAMAT, Muhamad Amin Jadaan
Riyadh 8022 (SA)**

(74) Representative: **CPW GmbH
Kasinostraße 19-21
42103 Wuppertal (DE)**

(56) References cited:
**CN-U- 215 755 438     US-B2- 11 345 065**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The application pertains to geotextile materials that can be used to in civil engineering applications, in particular in infrastructure projects. The most important requirements in civil engineering applications are to provide sufficient filtration, drainage, separation and/or reinforcement, in particular in infrastructure projects.

Geotextile materials can for example be used in infrastructure projects to provide soil reinforcement and many other engineering functions. It is known that geogrids can especially be used in soil reinforcement works. Specifically, geogrids are used under roads, buildings, in reinforced slopes, and in retaining walls.

The process of soil reinforcement by applying geogrids depends mainly on three mechanisms: soil confinement, load redistribution, and tensioned membrane effect.

To achieve the goal of soil reinforcement, the reinforcing geotextile material must have two basic characteristics, i.e. the ability to interfere with the soil as much as possible to provide interlock of the soil by the geotextile material, and the geotextile material should have sufficient stiffness, i.e. the resistance of the geotextile material to deform under load, so that it can be easily stimulated.

The currently available geotextile materials generally possess only one of these two basic characteristics while the other basic characteristic is not fulfilled at all or only to a relatively limited extend.

CA 1209798 A discloses a composite structure comprising at least one nonwoven fiber layer and a layer of granular particles. The layer of granular particles is arranged and held between a backing layer and a cover layer, with at least one of the layers containing fibers or filaments needle bonded with each other through the particle layer. By the needle felting of the backing layer and the cover layer, the particle layer located in between is penetrated by fibers or filaments in a uniform manner which extend through the particle layer and secure the particles in their positions. Document CN 215 755 438 U discloses a winding device for three-dimensional nonwoven geotextile.

There remains a need for improved geosynthetic materials for civil engineering, in particular in infrastructure projects.

The object of the invention is to prevent, or at least reduce, the disadvantages of the prior art.

A three-dimensional nonwoven geotextile is provided, which is not according to the claimed invention.

A three-dimensional geotextile material, the three-dimensional geotextile material comprising a nonwoven layer of fibers, and comprising a multitude of cell structures for confinement of particulate matter, in particular for confinement of soil, clay, sand and/or gravel, the cell structures comprising a base and one or more side walls composed of the nonwoven layer of fibers and forming an opening in the cell structures, the cell structures having a depth, the base of the cell structures having an inner surface and an opposite outer surface, wherein the depth of the cell structures is 1.0 cm or more, enables to combine the two basic characteristics for soil reinforcement, by providing a high level of interlock of the soil by the geotextile material and sufficient stiffness of the geotextile material. The stiffness of the geotextile material is the resistance of the geotextile material to deform under load, $EA = N/\varepsilon$.

The three-dimensional geotextile material may be provided by shaping a two-dimensional nonwoven layer of fibers into a three-dimensional geotextile material, which can be understood as a transition from an essentially flat form of a geotextile material, in particular of a two-dimensional nonwoven geotextile, into a spatial form, i.e. into a three-dimensional nonwoven geotextile.

The three-dimensional geotextile material is a unitary material, i.e. a material which is not assembled from separate elements, composed of the nonwoven layer of fibers.

The new spatial form of the three-dimensional geotextile material may be adjusted in terms of its dimensions, such as cell depth, other different geometries of the cell, or the distance between each two adjacent cells, such that, these adopted dimensions satisfy the efficiency of the three-dimensional geotextile material and the possibility for manufacturing and packaging, and facilitate its use as well, depending on the requirements in the intended application.

The depth of a cell structure is the distance between the plane defined by the opening of the cell structure and the inner surface of the base of the cell structure.

The three-dimensional geotextile material may comprise a repetitive cell model, which means that the three-dimensional geotextile material comprises the cell structures in a repetitive pattern.

Each of the cell structures comprised in the three-dimensional geotextile material has two in-plane dimensions (length and width), which may be varied. The cell structures comprised in the three-dimensional geotextile material may advantageously have in-plane dimensions ranging from 50 to 200 mm, preferably ranging from 100 to 150 mm, independently for the length and width.

The cell structures comprised in the three-dimensional geotextile material has a third dimension (thickness), which is at least 1.0 cm or more. The cell structures comprised in the three-dimensional geotextile material preferably have a third dimension of at least 40% of the largest of the two in-plane dimensions, enabling that an effective soil confinement can be secured inside and between the cell structures.

The three-dimensional geotextile material may comprise bridging sections composed of the nonwoven layer of fibers between the openings of the cell structures connecting side walls of adjacent cell structures, the bridging sections having a first surface in a plane defined by the openings of the cell structures and an opposite second surface.

The width of the bridging sections defines the distance between (each of) two adjacent cell structures. The width of the bridging sections may be varied, but ranges preferably between from 10 to 30 mm.

The distance between side walls of adjacent cell structures may increase from the plane defined by the openings of the cell structures to the base of the cell structures, i.e. the distance between side walls of adjacent cell structures may increase along the depth of the cell structures. The dimensions of the base of the cell structures may be smaller than the dimensions of the openings of the cell structures, enabling to stack multiple layers of cell structures within in each other.

The three-dimensional geotextile material may preferably be manufactured from polypropylene fibers or polyester fibers, from polypropylene fibers and polyester fibers, or from either polypropylene fibers or polyester fibers with a percentage of low melting fibers, preferably polyethylene fibers or polypropylene fibers.

The three-dimensional geotextile material may be composed of a single material or even a single element, which is a geotextile, i.e. a nonwoven layer of fibers alone, and in this case, the three-dimensional geotextile material will have the same advantages of the flat, two-dimensional geotextile, i.e. the two-dimensional nonwoven layer of fibers, but in combination with the addition of a high ability to interfere with soil.

The three-dimensional geotextile material may be combined with one or more geogrids to provide a three-dimensional geotextile composite material, where the (overall) stiffness of the final three-dimensional geotextile composite material can be controlled and/or increased by the stiffness of the used geogrid(s). In the three-dimensional geotextile composite material, the three-dimensional geotextile material enables to achieve better interference with soil and the geogrid enables to increase the (overall) stiffness of the three-dimensional geotextile composite material.

According to the engineering community interested in the field, there are three main mechanisms through which the soil is reinforced when using geogrids.

Firstly, the interlock between aggregates (e.g. soil) and mesh openings of the geogrid will contribute to restrict the movement of these aggregates and confining them laterally, thereby increasing the stiffness of the reinforced layer of soil. This is a process in which randomness plays a major role, as a better interference between the mesh openings and the aggregates depends on several factors, including the size of the aggregates, the opportunity to arrange them in a certain way, the dimensions of the mesh openings, and the shape of the mesh openings. Considering the fact that a geogrid is only a two-dimensional structure reduces the possibility of interference with soil, as the third dimension generally does not exceed 3 mm. Also, placing the geogrid on a well-compacted soil may reduce the chance of interlock. The use of engineered soil of small grain sizes with relatively large openings geogrids reduces the effect of the confinement process, since increasing the contact points between the grains of soil within the mesh opening gives a greater opportunity for movement, and thus causing less effect of the confinement process. Therefore, it is recommended usually to use a defined grain distribution to achieve a higher chance of better interlock.

In this regard, some geogrid manufacturers have argued that some triangular openings in geogrids have the ability to confine gravel and distribute the load better than other forms of openings, such as square or rectangular. Such arguments can be understood, as also the rigidity of the triangular shape plays an important role in reducing the deformations of the mesh under the influence of load applied. However, in all day life, practical investigation remains the most acceptable method to determine the accuracy of this phenomenon.

Secondly, the mechanism of "load distribution" which depends to some extent on the previous mechanism. It is known by the skilled person, that the angle at which the load is spread within the reinforced layer of soil, is related to the stiffness of this layer, which is in turn related to the ability of the geogrid to confine aggregates, such as gravel, and resist deformation.

Thirdly, the mechanism of a tensioned membrane, which depends on fixing the geogrid at the loaded area edges by the overburden soil. This mechanism requires large deformations in the soil layer to start activation, which may not be allowed by settlement limits in different engineering facilities.

The three-dimensional geotextile material comprises cell structures which can confine particulate matter much more effectively than the thin ribs of a geogrid. Accordingly, the thickness of the soil layer interlocked by the three-dimensional geotextile material is much larger. The interlock of soil by a three-dimensional geotextile material having a third dimension or thickness of at least 10 mm, for example of 60 mm will be increased significantly as compared to the interlock of soil by a geogrid having a thickness of, for example, just 3 mm. The particulate matter, such as soil, inside the cell structures will be completely confined, as it is retained by the base and the one or more side walls cell. Once applied in a civil engineering application, in particular in an infrastructure project, a load will be applied from the upper side, i.e. onto the plane defined by the openings of the cell structures from, therefore the particulate matter can not escape in any direction.

The three-dimensional geotextile material may comprise bridging sections composed of the nonwoven layer of fibers between the openings of the cell structures connecting side walls of adjacent cell structures, the bridging sections having a first surface in a plane defined by the openings of the cell structures and an opposite second surface to provide flexibility to the three-dimensional geotextile material and to enable that a geogrid may be connected to the first surface of the bridging sections comprised in the three-dimensional geotextile material and/or to the second surface of the bridging sections comprised in the three-dimensional geotextile material. The bridging sections have a first surface facing upward when the three-dimensional geotextile material is in use and an opposite second surface facing downward when the three-dimensional geotextile material is in use.

The depth of the cell structures comprised in the three-dimensional geotextile material may be varied provided that the depth of the cell structures is 1.0 cm or more. The depth of the cell structures comprised in the three-dimensional geotextile material may be 2.0 cm or more, preferably 3.0 cm or more, or preferably 5.0 cm or more, or preferably 6.0 cm or more, or preferably 7.0 cm or more, or preferably 10.0 cm or more to provide improved interlock of the soil by the geotextile material.

The three-dimensional geotextile material may comprise a first group of cell structures having a first depth and a second group of cell structures having a second depth, wherein the second depth is larger than the first depth to further improve the interlock of soil by the three-dimensional geotextile material.

The three-dimensional geotextile material may comprise cell structures having a circular shaped opening, an oval shaped opening, a rectangular shaped opening, a square shaped opening, a polygonal shaped opening, preferably having 3 to 8 sides, wherein all sides have the same length, and/or a polygonal shaped opening, preferably having 3 to 8 sides, having sides wherein at least one side has a different length than at least one other side of the polygonal shaped opening.

The nonwoven layer of fibers comprised in the three-dimensional geotextile material may comprise a single type of fibers having a melting point. The single type of fibers may comprise any thermoplastic polymer, wherein the thermoplastic polymer may be varied depending on the intended application and/or on the environmental conditions. The nonwoven layer of fibers comprised in the three-dimensional geotextile material may comprise a single type of fibers, wherein the nonwoven layer of fibers preferably comprises fibers comprising a polypropylene polymer, fibers comprising a polyester polymer, or fibers comprising a polyethylene polymer, which are particularly suitable for application in soil reinforcement applications.

The nonwoven layer of fibers comprised in the three-dimensional geotextile material may comprise first fibers having a first melting temperature and second fibers having a second melting temperature, wherein the second melting temperature is at least 10°C lower, preferably at least 20°C lower, than the first melting temperature to enable thermal bonding of the nonwoven layer of fibers and to improve the filtration effectiveness of the three-dimensional geotextile material to confine particulate matter within the cell structures. The three-dimensional geotextile material may be provided by shaping a two-dimensional nonwoven layer of fibers into a three-dimensional geotextile material. Upon shaping the two-dimensional nonwoven layer of fibers into a three-dimensional geotextile material, the opening size of the nonwoven layer of fibers forming the base and the one or more side walls could be increased due to deformation during shaping, which would reduce the filtration effectiveness of the three-dimensional geotextile material to confine particulate matter within the cell structures, but the second fibers having a second melting temperature, wherein the second melting temperature is at least 10°C lower, preferably at least 20°C lower, than the first melting temperature of the first fibers may be melted to counteract against the increase of the opening size of the nonwoven layer of fibers, thereby preventing, or at least reducing, the risk of loss of particulate matter through openings in the nonwoven layer of fibers.

The nonwoven layer of fibers comprised in the three-dimensional geotextile material may comprise first fibers having a first melting temperature and second fibers having a second melting temperature, wherein the nonwoven layer of fibers preferably comprises fibers comprising a polypropylene polymer, fibers comprising a polyester polymer, or fibers comprising a polyethylene polymer, or any mixture thereof, which are particularly suitable for application in soil reinforcement applications.

In an embodiment, the nonwoven layer of fibers comprised in the three-dimensional geotextile material comprises fibers comprising a polypropylene polymer and fibers comprising a polyethylene polymer.

In another embodiment, the nonwoven layer of fibers comprised in the three-dimensional geotextile material comprises fibers comprising a polyester polymer and fibers comprising a polypropylene polymer.

In yet another embodiment, the nonwoven layer of fibers comprised in the three-dimensional geotextile material comprises fibers comprising a polyester polymer and fibers comprising a polyethylene polymer.

The three-dimensional geotextile material may have a tensile strength of at least 5 kN/m in at least one direction, preferably both in the machine direction and in the cross machine direction. The three-dimensional geotextile material may preferably have a tensile strength of at least 10 kN/m in at least one direction, preferably both in the machine direction and in the cross machine direction, or preferably at least 15 kN/m, or preferably at least 20 kN/m, or preferably at least 30 kN/m, or preferably at least 40 kN/m or preferably at least 50 kN/m or preferably at least 60 kN/m or preferably at least 70 kN/m, according to EN-ISO 10319 with a sample of 20 cm width.

A three-dimensional geotextile composite material is also provided, which is not according to the claimed invention. The three-dimensional geotextile composite material comprises a three-dimensional geotextile material as disclosed herein above and a geogrid connected to the three-dimensional geotextile material, the geogrid comprising a first set of parallel elongated members and a second set of parallel elongated members, the second set of parallel elongated members being oriented at an angle to the first set of parallel elongated members to provide a three-dimensional geotextile composite material having excellent performance regarding the two basic characteristics, i.e. by providing a high level of interlock of the soil by the three-dimensional geotextile composite material and high stiffness in the three-dimensional geotextile composite material.

The three-dimensional geotextile composite material aims to combine the advantages of a traditional two-dimensional geotextile, such as filtration, separation and/or drainage, and the advantages of reinforcing geogrids, and adding soil confinement capability.

It is considered that the response of the cell structures under the effect of loading will depend on where the geogrid is connected to the three-dimensional geotextile material, and the way of applying the load relative to the cell structures.

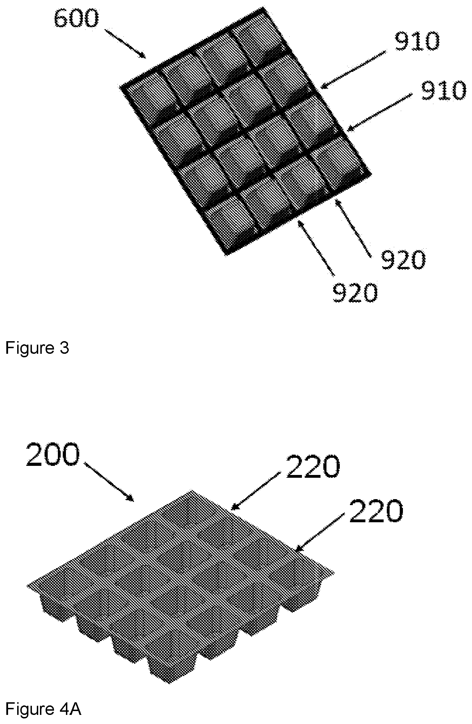

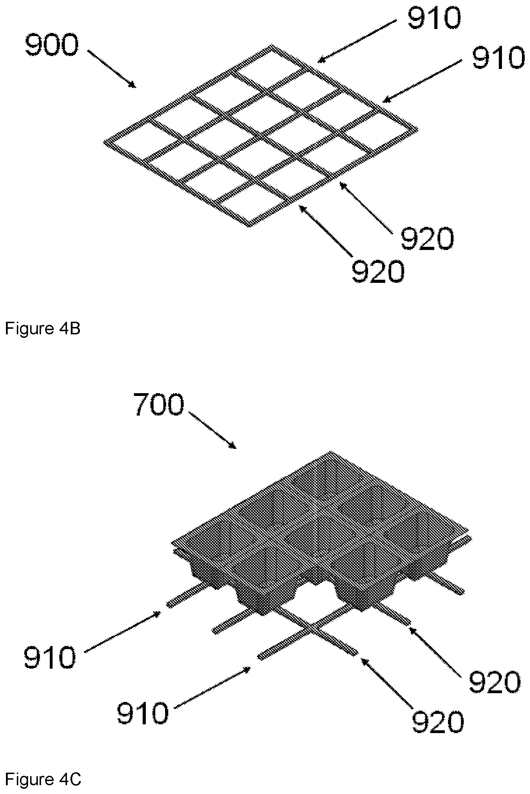

The geogrid may be connected to the to the second surface of the bridging sections comprised in the three-dimensional geotextile material (directly opposite the upper surface) as for example schematically illustrated in Figure 3, or it can be connected to the outer surface of the base of the cell structures comprised in the three-dimensional geotextile material (fixed on the lower plane) as for example schematically illustrated in Figure 4C.

A load may be applied either vertically above the cell structures, for example truck loads over reinforced road pavement, or may be applied horizontally, for example in the case of constructing slopes and retaining walls.

In an embodiment, the geogrid comprised in the three-dimensional geotextile composite material comprises a first set of parallel elongated members and a second set of parallel elongated members, the second set of parallel elongated members being oriented at an angle of 90° to the first set of parallel elongated members, which is particularly advantageous for a three-dimensional geotextile composite material which is mainly loaded in the machine direction and/or in the cross machine direction, or for connection to a three-dimensional geotextile material comprising cell structures having a rectangular shaped opening or a square shaped opening.

In another embodiment, the geogrid comprised in the three-dimensional geotextile composite material comprises a first set of parallel elongated members and a second set of parallel elongated members, the second set of parallel elongated members being oriented at an angle of 60° to the first set of parallel elongated members, which is particularly advantageous for a three-dimensional geotextile composite material which is also loaded at an angle to the machine direction and/or to the cross machine direction, or for connection to a three-dimensional geotextile material comprising cell structures having a polygonal shaped opening having 3 sides.

In yet another embodiment, the geogrid comprised in the three-dimensional geotextile composite material comprises a first set of parallel elongated members, a second set of parallel elongated members, and a third set of parallel elongated members, the second set of parallel elongated members being oriented at an angle of 60° to the first set of parallel elongated members and the third set of parallel elongated members being oriented at an angle of 60° to the first set of parallel elongated members and at an angle of 60° to the second set of parallel elongated members, which is particularly advantageous for a three-dimensional geotextile composite material which is also loaded at an angle to the machine direction and/or to the cross machine direction, or for connection to a three-dimensional geotextile material comprising cell structures having a polygonal shaped opening having 3 sides.

The geogrid comprised in the three-dimensional geotextile composite material connected to the three-dimensional geotextile material comprises a first set of parallel elongated members, a second set of parallel elongated members and optionally a third set of elongated members, wherein the each of the elongated members is preferably composed of a single strip or of two adjacent strips to enable to improve the stiffness of the geogrid in relation to the required stiffness for the intended application.

The geogrid comprised in the three-dimensional geotextile composite material may be connected to the first surface of the bridging sections comprised in the three-dimensional geotextile material to provide stiffness to the three-dimensional geotextile composite material.

The geogrid comprised in the three-dimensional geotextile composite material may be connected to the second surface of the bridging sections comprised in the three-dimensional geotextile material reducing the risk of transverse displacement of the geogrid in relation to the three-dimensional geotextile material.

The geogrid comprised in the three-dimensional geotextile composite material may be connected to the outer surface of the base of the cell structures comprised in the three-dimensional geotextile material to further increase stiffness of the three-dimensional geotextile composite material.

The three-dimensional geotextile composite material may further comprise a second three-dimensional geotextile material comprising a second nonwoven layer of fibers, and comprising a multitude of cell structures, the cell structures comprising a base and one or more side walls composed of the second nonwoven layer of fibers and forming an opening in the cell structures, the cell structures having a depth, the base of the cell structures having an inner surface and an opposite outer surface, and comprising bridging sections composed of the second nonwoven layer of fibers between the openings of the cell structures connecting side walls of adjacent cell structures, the bridging sections having a first surface in a plane defined by the openings of the cell structures and an opposite second surface, wherein the second three-dimensional geotextile material is configured such that the three-dimensional geotextile material as disclosed herein above can be stacked into the second three-dimensional geotextile material, wherein the geogrid is sandwiched between the second surface of the bridging sections comprised in the three-dimensional geotextile material as disclosed herein above and the first surface of the bridging sections comprised in the second three-dimensional geotextile material to fully encapsulate the geogrid by the three-dimensional geotextile material and the second three-dimensional geotextile material.

The three-dimensional geotextile composite material comprises a three-dimensional geotextile material comprising a nonwoven layer of fibers, and comprising a multitude of cell structures, the cell structures comprising a base and one or more side walls composed of the nonwoven layer of fibers and forming an opening in the cell structures, the cell structures having a depth, the base of the cell structures having an inner surface and an opposite outer surface, and comprising bridging sections composed of the nonwoven layer of fibers between the openings of the cell structures connecting side walls of adjacent cell structures, the bridging sections having a first surface in a plane defined by the openings of the cell structures and an opposite second surface, and a geogrid connected to the three-dimensional geotextile material, wherein the geogrid may be embedded within the nonwoven layer of fibers, wherein the parallel elongated members of the geogrid are embedded within the bridging sections comprised in the three-dimensional geotextile material.

In an embodiment, the three-dimensional geotextile composite material comprises a second geogrid, wherein the second geogrid is connected to the first surface of the bridging sections comprised in the three-dimensional geotextile material as disclosed herein above to further increase stiffness of the three-dimensional geotextile composite material.

In another embodiment, the three-dimensional geotextile composite material comprises a second geogrid, wherein the second geogrid is connected to the second surface of the bridging sections comprised in the three-dimensional geotextile material as disclosed herein above to further increase stiffness of the three-dimensional geotextile composite material.

In another embodiment, the three-dimensional geotextile composite material comprises a second geogrid, wherein the second geogrid is connected to the outer surface of the base of the cell structures comprised in the three-dimensional geotextile material as disclosed herein above to further increase stiffness of the three-dimensional geotextile composite material.

In yet another embodiment, the three-dimensional geotextile composite material comprises a second geogrid, wherein the second geogrid is sandwiched between the second surface of the bridging sections comprised in the three-dimensional geotextile material as disclosed herein above and the first surface of the bridging sections comprised in the second three-dimensional geotextile material to fully encapsulate the geogrid by the three-dimensional geotextile material and the second three-dimensional geotextile material.

The geogrid comprised in the three-dimensional geotextile composite material comprises a first set of parallel elongated members and a second set of parallel elongated members and optionally a third set of elongated members, wherein the parallel members of the first set of parallel elongated members and/or the parallel members of the second set of parallel elongated members and/or the parallel members of the third set of parallel elongated members comprise a polypropylene polymer and/or a polyester polymer, which are particularly suitable for application in soil reinforcement applications.

The three-dimensional geotextile composite material comprises a geogrid connected to the three-dimensional geotextile material. The geogrid may be connected by any suitable technique to the three-dimensional geotextile material disclosed herein above, for example by mechanical bonding, by thermal bonding or by an adhesive. The geogrid is preferably connected to the three-dimensional geotextile by thermal bonding or by an adhesive, which means that the process does not require a step of mechanical bonding, such as by needling or stitching.

The three-dimensional geotextile composite material may have a tensile strength of at least 30 kN/m in at least one direction, preferably both in the machine direction and in the cross machine direction. The three-dimensional geotextile composite material may preferably have a tensile strength of at least 40 kN/m, or preferably at least 50 kN/m, or preferably at least 60 kN/m, or preferably at least 70 kN/m, or at least 100 kN/m in at least one direction, or at least 120 kN/m, or preferably at least 140 kN/m in at least one direction, according to EN-ISO 10319 with a sample of 20 cm width.

The three-dimensional geotextile composite material comprises a geogrid connected to the three-dimensional geotextile material. Three-dimensional geotextile composite materials comprising a geogrid connected to the outer surface of the base of the cell structures comprised in the three-dimensional geotextile material (schematically illustrated in Figure 4C and 4D and in Figures 16 and 17) can not be efficiently wound on a roll as it is not possible to stack multiple layers of cell structures within in each other when a geogrid is connected to the outer surface of the base of the cell structures.

The three-dimensional geotextile composite material comprising a geogrid connected to the outer surface of the base of the cell structures comprised in the three-dimensional geotextile material may in principle be wound into a roll, wherein the diameter of each subsequent winding is increased by two times the thickness of the three-dimensional geotextile composite material, which is mainly defined by the depth of the cell structures comprised in the three-dimensional geotextile composite material. However, due to the relatively large thickness of the three-dimensional geotextile composite material, the roll diameter for a certain length of the three-dimensional geotextile composite material may become impractically large and may not fit in a container or in a truck. When the roll diameter would be restricted to fit in a container or in a truck, then the length of the three-dimensional geotextile composite material contained on the roll may become too small for intended applications.

The three-dimensional geotextile composite comprising a geogrid connected to the outer surface of the base of the cell structures comprised in the three-dimensional geotextile material may comprise a first geogrid connected to the outer surface of the base of a first series of cell structures comprised in the three-dimensional geotextile material and a second geogrid connected to the outer surface of the base of a second series of cell structures comprised in the three-dimensional geotextile material, wherein the three-dimensional geotextile composite material, wherein the three-dimensional geotextile composite material excludes a geogrid between the first series of cell structures and the second series of cell structures comprised in the three-dimensional geotextile material, or at least excludes parallel elongated members comprised in a geogrid between the first series of cell structures and the second series of cell structures comprised in the three-dimensional geotextile material, to enable that the three-dimensional geotextile composite material can be folded to dimensions such that the folded three-dimensional geotextile composite material can be loaded in a container or in truck.

A stack of multiple layers of folded three-dimensional geotextile composite material may be provided for efficient loading and unloading of folded three-dimensional geotextile composite material in or from a container, or in or from a truck. The stack of multiple layers of folded three-dimensional geotextile composite material may be rotated by 90° for even more for efficient loading and unloading of folded three-dimensional geotextile composite material in or from a container, or in or from a truck.

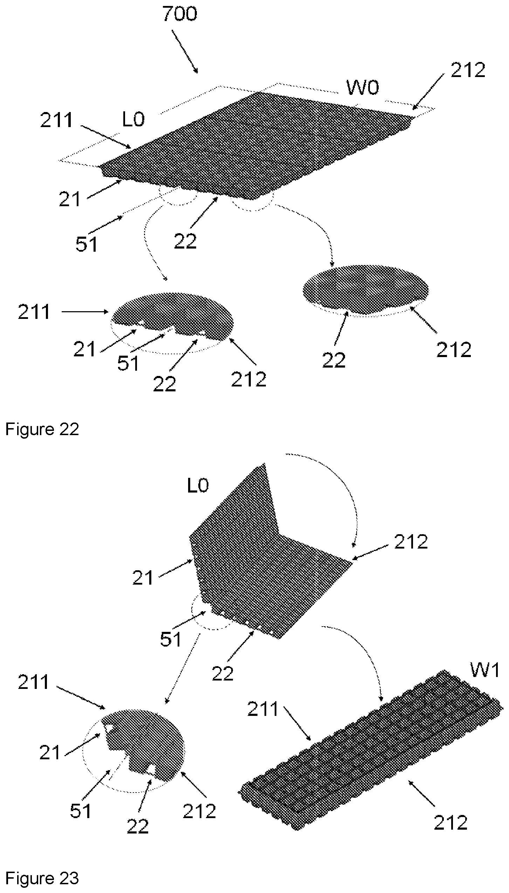

Figure 22 schematically illustrates a three-dimensional geotextile composite material (700) comprising a first geogrid (21) connected to the outer surface of the base of a first series of cell structures (211) comprised in the three-dimensional geotextile material and a second geogrid (22) connected to the outer surface of the base of a second series of cell structures (212) comprised in the three-dimensional geotextile material. The first geogrid (21) and the second geogrid (22) do not form a continuous layer of geogrid in the three-dimensional geotextile composite material. The three-dimensional geotextile composite material excludes a geogrid between the first series of cell structures (211) and the second series of cell structures (212) comprised in the three-dimensional geotextile material, or at least excludes parallel elongated members comprised in a geogrid between the first series of cell structures (211) and the second series of cell structures (212) comprised in the three-dimensional geotextile material, as indicated by line (51). The three-dimensional geotextile composite material (700) has a length (L0), which may for example be a length of 15 m, and a width (W0), which may for example be a width of 4 m.

Figure 23 schematically illustrates folding of the three-dimensional geotextile composite material of Figure 22 along line (51). After folding the three-dimensional geotextile composite material still has a length (L0). However, due to folding along line (51), the width after folding (W1) of the three-dimensional geotextile composite material is reduced by 50% as compared to the width before folding (W0). The width after folding (W1) may for example be a width of 2 m, enabling that the folded three-dimensional geotextile composite material can be loaded in a container or in truck.

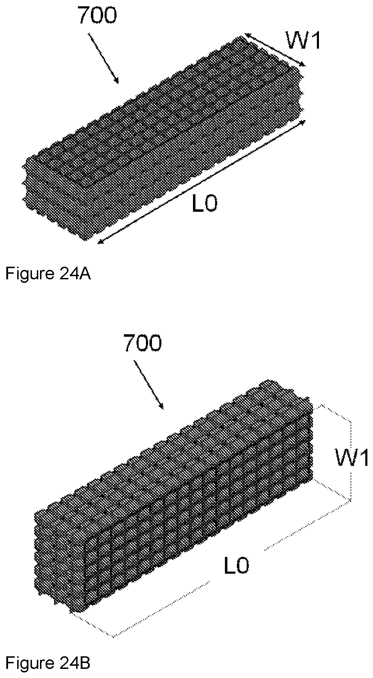

Figure 24A schematically illustrates a stack of three layers of the folded three-dimensional geotextile composite material of Figure 23. Figure 24B schematically illustrates a stack of three layers of the folded three-dimensional geotextile composite material of Figure 23, wherein the stack has been rotated by 90°.

Not only the three-dimensional geotextile composite material comprising a geogrid connected to the outer surface of the base of the cell structures comprised in the three-dimensional geotextile material may comprise a first geogrid connected to the outer surface of the base of a first series of cell structures comprised in the three-dimensional geotextile material and a second geogrid connected to the outer surface of the base of a second series of cell structures comprised in the three-dimensional geotextile material, wherein the three-dimensional geotextile composite material, wherein the three-dimensional geotextile composite material excludes a geogrid between the first series of cell structures and the second series of cell structures comprised in the three-dimensional geotextile material, or at least excludes parallel elongated members comprised in a geogrid between the first series of cell structures and the second series of cell structures comprised in the three-dimensional geotextile material can be folded.

A three-dimensional geotextile composite material comprising a geogrid connected to the first surface of bridging sections comprised in the three-dimensional geotextile material may comprise a first geogrid connected to the first surface of the bridging sections of a first series of cell structures comprised in the three-dimensional geotextile material and a second geogrid connected to the first surface of bridging sections of a second series of cell structures comprised in the three-dimensional geotextile material, wherein the three-dimensional geotextile composite material excludes a geogrid between the first series of cell structures and the second series of cell structures comprised in the three-dimensional geotextile material, or at least excludes parallel elongated members comprised in a geogrid between the first series of cell structures and the second series of cell structures comprised in the three-dimensional geotextile material, to enable that the three-dimensional geotextile composite material can be folded to dimensions such that the folded three-dimensional geotextile composite material can be loaded in a container or in truck.

A three-dimensional geotextile composite material comprising a geogrid connected to the second surface of bridging sections comprised in the three-dimensional geotextile material may comprise a first geogrid connected to the

## EP 4 658 592 B1

second surface of the bridging sections of a first series of cell structures comprised in the three-dimensional geotextile material and a second geogrid connected to the second surface of bridging sections of a second series of cell structures comprised in the three-dimensional geotextile material, wherein the three-dimensional geotextile composite material excludes a geogrid between the first series of cell structures and the second series of cell structures comprised in the three-dimensional geotextile material, or at least excludes parallel elongated members comprised in a geogrid between the first series of cell structures and the second series of cell structures comprised in the three-dimensional geotextile material, to enable that the three-dimensional geotextile composite material can be folded to dimensions such that the folded three-dimensional geotextile composite material can be loaded in a container or in truck.

A three-dimensional geotextile composite material comprising a geogrid sandwiched between the second surface of bridging sections comprised in the three-dimensional geotextile and the first surface of bridging sections comprised in a second three-dimensional geotextile material may comprise a first geogrid sandwiched between the second surface of the bridging sections of a first series of cell structures comprised in the three-dimensional geotextile material and the first surface of the bridging sections comprised of the first series of cell structures comprised in the second three-dimensional geotextile material, and a second geogrid sandwiched between the second surface of the bridging sections of a second series of cell structures comprised in the three-dimensional geotextile material and the first surface of the bridging sections comprised of the second series of cell structures comprised in the second three-dimensional geotextile material, wherein the three-dimensional geotextile composite material excludes a geogrid between the first series of cell structures and the second series of cell structures comprised in the three-dimensional geotextile material, or at least excludes parallel elongated members comprised in a geogrid between the first series of cell structures and the second series of cell structures comprised in the three-dimensional geotextile material, to enable that the three-dimensional geotextile composite material can be folded to dimensions such that the folded three-dimensional geotextile composite material can be loaded in a container or in truck.

Geogrids have a resistance against deformation under a tensile load. However, depending on the material(s) of which the geogrid is composed, the bending stiffness of geogrids may be low enough, to allow folding of the three-dimensional geotextile composite materials comprising the geogrid connected to the three-dimensional geotextile material.

The three-dimensional geotextile materials, i.e. which does not comprise a geogrid, may also be folded in a similar manner.

A process for manufacturing a three-dimensional geotextile material is also provided, which is not according to the claimed invention. The process for manufacturing a three-dimensional geotextile material comprises the steps of supplying a nonwoven layer of fibers, heating the nonwoven layer of fibers to an elevated temperature and pressing a male mold into the nonwoven layer of fibers to shape the nonwoven layer of fibers into a three-dimensional geotextile material comprising a multitude of cell structures for confinement of particulate matter, the cell structures comprising a base and one or more side walls composed of the nonwoven layer of fibers and forming an opening in the cell structures, the cell structures having a depth, the base of the cell structures having an inner surface and an opposite outer surface, wherein the depth of the cell structures is 1.0 cm or more, enabling to provide a three-dimensional geotextile material which advantageously combines the two basic characteristics, by providing a high level of interlock of the soil by the geotextile material and sufficient stiffness of the geotextile material.

The depth of the cell structures comprised in the three-dimensional geotextile material provided by the process for manufacturing the three-dimensional geotextile material may be 2.0 cm or more, preferably 3.0 cm or more, or preferably 5.0 cm or more, or preferably 6.0 cm or more, or preferably 7.0 cm or more, or preferably 10.0 cm or more to provide improved interlock of the soil by the geotextile material.

The process for manufacturing a three-dimensional geotextile material may comprise the steps of heating the nonwoven layer of fibers to an elevated temperature and pressing a male mold into the nonwoven layer of fibers, which is supported by a female mold to shape the nonwoven layer of fibers into a three-dimensional geotextile material comprising a multitude of cell structures for confinement of particulate matter, the cell structures comprising a base and one or more side walls composed of the nonwoven layer of fibers and forming an opening in the cell structures, the cell structures having a depth, the base of the cell structures having an inner surface and an opposite outer surface, wherein the depth of the cell structures is 1.0 cm or more.

The process for manufacturing a three-dimensional geotextile material may comprise the step of cooling the shaped three-dimensional geotextile material to ambient temperature, either by passive cooling or active cooling, for example by cold air.

The process for manufacturing the three-dimensional geotextile material may comprise the steps of pressing a male mold into the nonwoven layer of fibers to shape the nonwoven layer of fibers into a three-dimensional geotextile material comprising a multitude of cell structures for confinement of particulate matter, the cell structures comprising a base and one or more side walls composed of the nonwoven layer of fibers and forming an opening in the cell structures, the cell structures having a depth, the base of the cell structures having an inner surface and an opposite outer surface, and comprising bridging sections composed of the nonwoven layer of fibers between the openings of the cell structures connecting side walls of adjacent cell structures, the bridging sections having a first surface in a plane defined by the openings of the cell structures and an opposite second surface, enabling to provide flexibility to the three-dimensional geotextile material and to enable that a geogrid may be connected to the first surface of the bridging sections comprised in the three-dimensional geotextile material and/or to the second surface of the bridging sections comprised in the three-dimensional geotextile material.

The process for manufacturing a three-dimensional geotextile material may comprise the step of pressing a male mold into the nonwoven layer of fibers to shape the nonwoven layer of fibers into a three-dimensional geotextile material comprising a multitude of cell structures, the cell structures comprising a base and one or more side walls composed of the nonwoven layer of fibers and forming an opening in the cell structures, wherein the cell structures have a depth of 2.0 cm or more, preferably 5.0 cm or more, or preferably 6.0 cm or more, or preferably 7.0 cm or more, or preferably 10.0 cm or more to provide improved interlock of the soil by the geotextile material.

The process for manufacturing a three-dimensional geotextile material may comprise the step of pressing a male mold into the nonwoven layer of fibers to shape the nonwoven layer of fibers into a three-dimensional geotextile material comprising a first group of cell structures having a first depth and a second group of cell structures having a second depth, wherein the second depth is larger than the first depth to further improve the interlock of soil by the three-dimensional geotextile material.

The process for manufacturing a three-dimensional geotextile material may comprise the step of pressing a male mold into the nonwoven layer of fibers to shape the nonwoven layer of fibers into a three-dimensional geotextile material comprising a multitude of cell structures, the cell structures comprising a base and one or more side walls composed of the nonwoven layer of fibers and forming an opening in the cell structures, the cell structures having a circular shaped opening, an oval shaped opening, a rectangular shaped opening, a square shaped opening, a polygonal shaped opening, preferably having 3 to 8 sides, wherein all sides have the same length, and/or a polygonal shaped opening, preferably having 3 to 8 sides, having sides wherein at least one side has a different length than at least one other side of the polygonal shaped opening.

The process for manufacturing a three-dimensional geotextile material comprises the step of supplying a nonwoven layer of fibers, wherein the nonwoven layer of fibers may comprise a single type of fibers having a melting point. The single type of fibers may comprise any thermoplastic polymer, wherein the thermoplastic polymer may be varied depending on the intended application and/or on the environmental conditions. The nonwoven layer of fibers comprised in the three-dimensional geotextile material may comprise a single type of fibers, wherein the nonwoven layer of fibers preferably comprises fibers comprising a polypropylene polymer, fibers comprising a polyester polymer, or fibers comprising a polyethylene polymer, which are particularly suitable for application in soil reinforcement applications.

The process for manufacturing a three-dimensional geotextile material comprises the step of supplying a nonwoven layer of fibers, wherein the nonwoven layer of fibers may comprise fibers having a first melting temperature and fibers having a second melting temperature, wherein the second melting temperature is at least 10°C lower, preferably at least 20°C, than the first melting temperature to enable thermal bonding of the nonwoven layer of fibers and to improve the filtration effectiveness of the three-dimensional geotextile material to confine particulate matter within the cell structures. Upon shaping the two-dimensional nonwoven layer of fibers into a three-dimensional geotextile material, the opening size of the nonwoven layer of fibers forming the base and the one or more side walls could be increased due to deformation during shaping, which would reduce the filtration effectiveness of the three-dimensional geotextile material to confine particulate matter within the cell structures, but the second fibers having a second melting temperature, wherein the second melting temperature is at least 10°C lower, preferably at least 20°C lower, than the first melting temperature of the first fibers may be melted to counteract against the increase of the opening size of the nonwoven layer of fibers, thereby preventing, or at least reducing, the risk of loss of particulate matter through openings in the nonwoven layer of fibers.

The nonwoven layer of fibers comprised in the three-dimensional geotextile material may comprise first fibers having a first melting temperature and second fibers having a second melting temperature, wherein the nonwoven layer of fibers preferably comprises fibers comprising a polypropylene polymer, fibers comprising a polyester polymer, or fibers comprising a polyethylene polymer, or any mixture thereof, which are particularly suitable for application in soil reinforcement applications.

In an embodiment, the process for manufacturing a three-dimensional geotextile material comprises the step of supplying a nonwoven layer of fibers, wherein the nonwoven layer of fibers comprises fibers comprising a polypropylene polymer and fibers comprising a polyethylene polymer.

In another embodiment, the process for manufacturing a three-dimensional geotextile material comprises the step of supplying a nonwoven layer of fibers, wherein the nonwoven layer of fibers comprises fibers comprising a polyester polymer and fibers comprising a polypropylene polymer.

In yet another embodiment, the process for manufacturing a three-dimensional geotextile material comprises the step of supplying a nonwoven layer of fibers, wherein the nonwoven layer of fibers comprises fibers comprising a polyester polymer and fibers comprising a polyethylene polymer.

The process for manufacturing a three-dimensional geotextile material may comprise the step heating the nonwoven layer of fibers to an elevated temperature of at least 100°C, preferably at least 110°, or preferably at least 120°C, to enable that the cells structures are properly shaped.

The process for manufacturing a three-dimensional geotextile material may comprise the step of supplying the nonwoven layer of fibers at a starting width and providing means for maintaining the nonwoven layer of fibers at a processing width which is at least 95%, or preferably at least 98%, or preferably at least 99%, of the starting width during the steps of heating the nonwoven layer of fibers to an elevated temperature and pressing a male mold into the nonwoven layer of fibers to shape the nonwoven layer of fibers into the three-dimensional geotextile material to enable that the three-dimensional geotextile material is provided at the desired width.

A process for manufacturing a three-dimensional geotextile composite material is also provided, which is not according to the claimed invention. The process for manufacturing a three-dimensional geotextile composite material comprises the steps of providing a three-dimensional geotextile material as disclosed herein above, providing a geogrid, the geogrid comprising a first set of parallel elongated members and a second set of parallel elongated members, the second set of parallel elongated members being oriented at an angle to the first set of parallel elongated members enabling to provide to provide a three-dimensional geotextile composite material having excellent performance regarding the two basic characteristics, i.e. by providing a high level of interlock of the soil by the three-dimensional geotextile composite material and high stiffness in the three-dimensional geotextile composite material.

In an embodiment, the process for manufacturing the three-dimensional geotextile composite material comprises the step of providing a geogrid, wherein the geogrid comprises a first set of parallel elongated members and a second set of parallel elongated members, the second set of parallel elongated members being oriented at an angle of 90° to the first set of parallel elongated members, which is particularly advantageous for a three-dimensional geotextile composite material which is mainly loaded in the machine direction and/or in the cross machine direction, or for connection to a three-dimensional geotextile material comprising cell structures having a rectangular shaped opening or a square shaped opening.

In another embodiment, the process for manufacturing a three-dimensional geotextile composite material comprises the step of providing a geogrid, wherein the geogrid comprises a first set of parallel elongated members and a second set of parallel elongated members, the second set of parallel elongated members being oriented at an angle of 60° to the first set of parallel elongated members, which is particularly advantageous for a three-dimensional geotextile composite material which is also loaded at an angle to the machine direction and/or to the cross machine direction, or for connection to a three-dimensional geotextile material comprising cell structures having a polygonal shaped opening having 3 sides.

In another embodiment, the process for manufacturing a three-dimensional geotextile composite material comprises the step of providing a geogrid, wherein the geogrid comprises a first set of parallel elongated members, a second set of parallel elongated members, and a third set of parallel elongated members, the second set of parallel elongated members being oriented at an angle of 60° to the first set of parallel elongated members and the third set of parallel elongated members being oriented at an angle of 60° to the first set of parallel elongated members and at an angle of 60° to the second set of parallel elongated members, which is particularly advantageous for a three-dimensional geotextile composite material which is also loaded at an angle to the machine direction and/or to the cross machine direction, or for connection to a three-dimensional geotextile material comprising cell structures having a polygonal shaped opening having 3 sides.

The process for manufacturing the three-dimensional geotextile composite material may comprise the step of connecting the geogrid to the first surface of the bridging sections comprised in the three-dimensional geotextile material disclosed herein above to further increase stiffness of the three-dimensional geotextile composite material.

The process for manufacturing the three-dimensional geotextile composite material may comprise the step of connecting the geogrid to the second surface of the bridging sections comprised in the three-dimensional geotextile material disclosed herein above to further increase stiffness of the three-dimensional geotextile composite material.

The process for manufacturing the three-dimensional geotextile composite material may comprise the step of connecting the geogrid to the outer surface of the base of the cell structures comprised in the three-dimensional geotextile material disclosed herein above to further increase stiffness of the three-dimensional geotextile composite material.

The process for manufacturing the three-dimensional geotextile composite material may comprise the steps of supplying a second nonwoven layer of fibers, heating the second nonwoven layer of fibers to an elevated temperature and pressing a male mold into the second nonwoven layer of fibers to shape the second nonwoven layer of fibers into a second three-dimensional geotextile material comprising a multitude of cell structures, the cell structures comprising a base and one or more side walls composed of the second nonwoven layer of fibers and forming an opening in the cell structures, the cell structures having a depth, the base of the cell structures having an inner surface and an opposite outer surface, and comprising bridging sections composed of the second nonwoven layer of fibers between the openings of the cell structures connecting side walls of adjacent cell structures, the bridging sections having a first surface in a plane defined by the openings of the cell structures of the second three-dimensional geotextile material, and an opposite second surface, wherein the second three-dimensional geotextile material is configured such that the three-dimensional geotextile material as disclosed herein above can be stacked into the second three-dimensional geotextile material, and sandwiching the geogrid between the second surface of the bridging sections comprised in the three-dimensional geotextile material as disclosed herein above and the first surface of the bridging sections comprised in the second three-dimensional geotextile material to fully encapsulate the geogrid by the three-dimensional geotextile material and the second three-dimensional geotextile material.

The process for manufacturing the three-dimensional geotextile composite material may comprise the steps of supplying a nonwoven layer of fibers and a geogrid connected to the three-dimensional geotextile material, wherein the geogrid is embedded within the nonwoven layer of fibers a geogrid, heating the nonwoven layer of fibers to an elevated temperature and pressing a male mold into the nonwoven layer of fibers to shape the nonwoven layer of fibers into a three-dimensional geotextile material comprising a multitude of cell structures, the cell structures comprising a base and one or more side walls composed of the nonwoven layer of fibers and forming an opening in the cell structures, the cell structures having a depth, the base of the cell structures having an inner surface and an opposite outer surface, and comprising bridging sections composed of the nonwoven layer of fibers between the openings of the cell structures connecting side walls of adjacent cell structures, the bridging sections having a first surface in a plane defined by the openings of the cell structures of the second three-dimensional geotextile material, and an opposite second surface, wherein the parallel elongated members of the geogrid are embedded within the bridging sections comprised in the three-dimensional geotextile material.

A process for manufacturing a three-dimensional geotextile composite material is also provided, which is not according to the claimed invention. The process for manufacturing the three-dimensional geotextile composite material comprises the steps of a supplying of a geogrid between a nonwoven layer of fibers and a second nonwoven layer of fibers, heating the geogrid, the nonwoven layer of fibers and the second nonwoven layer of fibers to an elevated temperature and pressing a male mold into the nonwoven layer at openings of the geogrid, shaping the nonwoven layer of fibers into a three-dimensional geotextile material comprising a multitude of cell structures, the cell structures comprising a base and one or more side walls composed of the nonwoven layer of fibers and forming an opening in the cell structures, the cell structures having a depth, the base of the cell structures having an inner surface and an opposite outer surface, wherein the depth of the cell structures is 1.0 cm or more, and comprising bridging sections composed of the nonwoven layer of fibers between the openings of the cell structures connecting side walls of adjacent cell structures, the bridging sections having a first surface in a plane defined by the openings of the cell structures and an opposite second surface, shaping the second nonwoven layer of fibers into a second three-dimensional geotextile material comprising a multitude of cell structures, the cell structures comprising a base and one or more side walls composed of the second nonwoven layer of fibers and forming an opening in the cell structures, the cell structures having a depth, the base of the cell structures having an inner surface and an opposite outer surface, and comprising bridging sections composed of the second nonwoven layer of fibers between the openings of the cell structures connecting side walls of adjacent cell structures, the bridging sections having a first surface in a plane defined by the openings of the cell structures and an opposite second surface, and sandwiching the geogrid between the second surface of the bridging sections comprised in the three-dimensional geotextile material and the first surface of the bridging sections comprised in the second three-dimensional geotextile material, wherein the second surface of the bridging sections comprised in the three-dimensional geotextile material is preferably thermally bonded to the first surface of the bridging sections comprised in the second three-dimensional geotextile material by melting polymer comprised in the nonwoven layer of fibers and/or the second nonwoven layer of fibers to fully encapsulate the geogrid by the three-dimensional geotextile material and the second three-dimensional geotextile material.

The process for manufacturing the three-dimensional geotextile composite material comprises the step of providing a geogrid, wherein the geogrid comprises a first set of parallel elongated members and a second set of parallel elongated members and optionally a third set of elongated members, wherein the parallel members of the first set of parallel elongated members and/or the parallel members of the second set of parallel elongated members and/or the parallel members of the third set of parallel elongated members may comprise a polypropylene polymer and/or a polyester polymer, which are particularly suitable for application in soil reinforcement applications.

In an embodiment, the process for manufacturing the three-dimensional geotextile composite may comprise the steps of providing a second geogrid and connecting the second geogrid to the first surface of the bridging sections comprised in the three-dimensional geotextile material as disclosed herein above further increase stiffness of the three-dimensional geotextile composite material.

In another embodiment, the process for manufacturing the three-dimensional geotextile composite may comprise the steps of providing a second geogrid and connecting the second geogrid to the second surface of the bridging sections comprised in the three-dimensional geotextile material as disclosed herein above further increase stiffness of the three-dimensional geotextile composite material.

In another embodiment, the process for manufacturing the three-dimensional geotextile composite may comprise the steps of providing a second geogrid and connecting the second geogrid to the outer surface of the base of the cell structures comprised in the three-dimensional geotextile material as disclosed herein above further increase stiffness of the three-dimensional geotextile composite material.

In yet another embodiment, the process for manufacturing the three-dimensional geotextile composite may comprise the steps of providing a second geogrid and sandwiching the second geogrid between the second surface of the bridging sections comprised in the three-dimensional geotextile material as disclosed herein above and the first surface of the bridging sections comprised in the second three-dimensional geotextile material to fully encapsulate the geogrid by the three-dimensional geotextile material and the second three-dimensional geotextile material.

The process for manufacturing the three-dimensional geotextile composite may comprise the step of connecting the geogrid to the three-dimensional geotextile material by any suitable technique. The process for manufacturing the three-dimensional geotextile composite preferably comprises the step of connecting the geogrid to the three-dimensional geotextile material disclosed herein above by thermal bonding or by applying an adhesive.

The weight of the nonwoven layer of fibers and/or the second nonwoven layer of fibers may be varied, independently from each other. The weight of the nonwoven layer of fibers and/or the second nonwoven layer of fibers may, independently from each other, be at least 70 $g/m^2$, preferably at least 100 $g/m^2$, or preferably at least 200 $g/m^2$, or preferably at least 250 $g/m^2$, or preferably at least 300 $g/m^2$, or preferably at least 400 $g/m^2$, or preferably at least 500 $g/m^2$, or preferably at least 600 $g/m^2$, enabling to achieve AASHTO M288 requirements for roads applications. The weight of the nonwoven layer of fibers and/or the second nonwoven layer of fibers may, independently from each other, be at most 1500 $g/m^2$, preferably at most 1400 $g/m^2$, or preferably at most 1300 $g/m^2$, or preferably at most 1200 $g/m^2$, or preferably at most 1100 $g/m^2$, or preferably at most 1000 $g/m^2$. The three-dimensional geotextile material enables to achieve application requirements at lower weights than prior art two-dimensional geotextile material.

The three-dimensional geotextile material may have dimensions of for example 4.0 m width by 50 m length by 70 mm depth at a low weight up to 700 $g/m^2$, in particular at a very light weight up to 250 $g/m^2$ or up to 150 $g/m^2$.

The thickness of the nonwoven layer of fibers and/or the second nonwoven layer of fibers may be varied, independently from each other. The thickness of the nonwoven layer of fibers and/or the second nonwoven layer of fibers may, independently from each other, be at least 2 mm, preferably at least 3 mm, or preferably at least 4 mm. The thickness of the nonwoven layer of fibers and/or the second nonwoven layer of fibers may, independently from each other, be at most 10 mm, preferably at most 8 mm, or preferably at most 6 mm.

The three-dimensional geotextile material and/or the three-dimensional geotextile material may have a width of at least 1 m, preferably at least 2 m, or preferably at least 3 m, or preferably at least 4 m.

The three-dimensional geotextile material and/or the three-dimensional geotextile material may have a length of at least 10 m, preferably at least 20 m, or preferably at least 30 m, or preferably at least 40 m, or preferably at least 50 m.

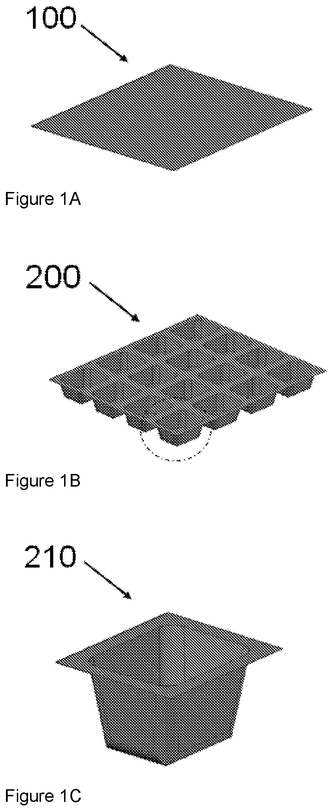

Figure 1 schematically illustrates the concept for providing a three-dimensional geotextile. Figure 1A schematically illustrates a two-dimensional geotextile (100), which in particular may be a two-dimensional nonwoven layer of fibers. Figure 1B schematically illustrates a three-dimensional geotextile material (200) comprising cell structures. Figure 1C schematically illustrates encircled cell structure in Figure 1B, the cell structure (210) comprising a base and one or more side walls composed of the nonwoven layer of fibers and forming an opening in the cell structures.

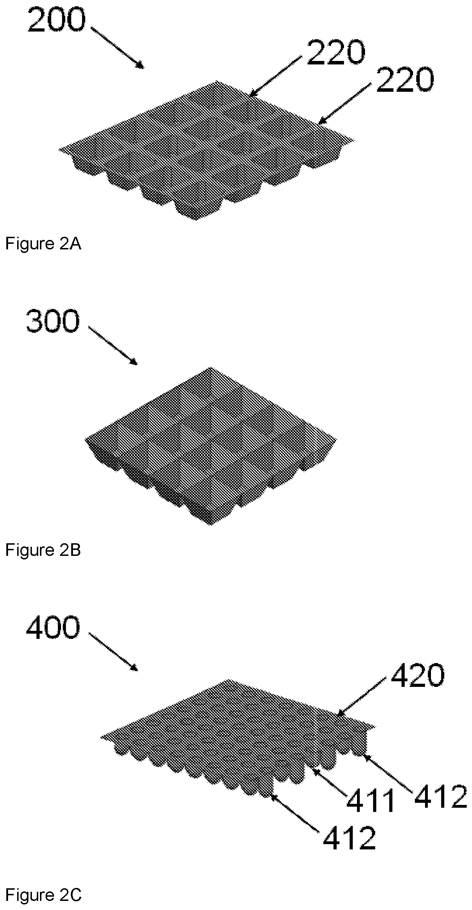

Figure 2 schematically illustrates three-dimensional geotextile materials comprising cell structures.

Figure 2A schematically illustrates a three-dimensional geotextile material (200) comprising cell structures having a rectangular shaped opening. The three-dimensional geotextile material comprises bridging sections (220) composed of the nonwoven layer of fibers between the openings of the cell structures.

Figure 2B schematically illustrates a three-dimensional geotextile material (300) comprising cell structures having a square shaped opening. The three-dimensional geotextile material does not comprise bridging sections between the openings of the cell structures.

Figure 2C schematically illustrates a three-dimensional geotextile material (400) comprising cell structures having a circular shaped opening. The three-dimensional geotextile material comprises bridging sections (420) composed of the nonwoven layer of fibers between the openings of the cell structures. The three-dimensional geotextile material comprises a first group of cell structures (411) having a first depth and a second group of cell structures (412) having a second depth, wherein the second depth is larger than the first depth.

Figure 3 schematically illustrates a three-dimensional geotextile composite material (600) comprising a three-dimensional geotextile material with a geogrid connected to (welded to) the opposite second surface of the bridging sections, i.e. connected (welded below the first surface (or upper surface) of the bridging sections comprised in the three-dimensional geotextile material. The geogrid comprises a first set of parallel elongated members (910) and a second set of parallel elongated members (920), the second set of parallel elongated members being oriented at an angle of 90° to the first set of parallel elongated members.

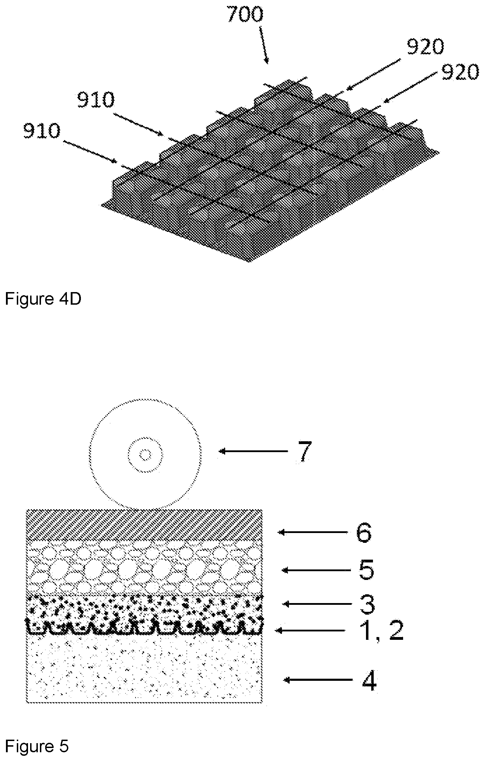

Figure 4 schematically illustrates a three-dimensional geotextile composite material (700) comprising a three-dimensional geotextile material with a geogrid connected to (welded to) the base of the cell structures comprised in the three-dimensional geotextile material, i.e. connected to the bottom face of the three-dimensional geotextile material.

Figure 4A schematically illustrates a three-dimensional geotextile material (200) comprising cell structures having a rectangular shaped opening. The three-dimensional geotextile material comprises bridging sections (220) composed of the nonwoven layer of fibers between the openings of the cell structures.

Figure 4B schematically illustrates a geogrid (900) comprising a first set of parallel elongated members (910) and a second set of parallel elongated members (920), the second set of parallel elongated members being oriented at an angle of 90° to the first set of parallel elongated members.

Figure 4C schematically illustrates a three-dimensional geotextile composite material (700) comprising the three-dimensional geotextile material of Figure 4A and comprising the geogrid of Figure 4B connected to the base of the cell structures comprised in the three-dimensional geotextile material.

Figure 4D schematically illustrates a three-dimensional geotextile composite material (700) corresponding to the three-dimensional geotextile composite material (700) of Figure 4C in a downside-up view, three-dimensional geotextile composite material comprising the three-dimensional geotextile material of Figure 4A and comprising the geogrid of Figure 4B connected to the base of the cell structures comprised in the three-dimensional geotextile material.

Figure 5 schematically illustrates reinforcement mechanisms in a road construction, under application of a vertical load. A car tire (7) represents an applied vertical load on a bituminous asphalt layer (6). The bituminous asphalt layer is applied on top of a gravel base or subbase layer (5). A three-dimensional geotextile composite material comprising a three-dimensional geotextile composite material (1) and a geogrid (2) is provided between the gravel base or subbase layer (5) and a subgrade soil layer (4).

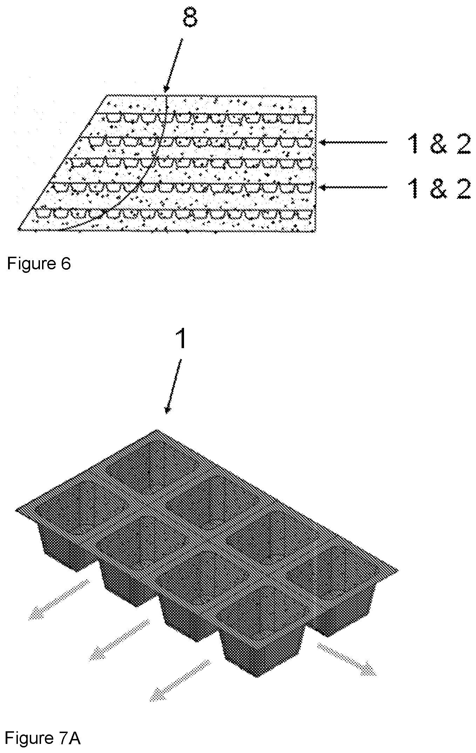

Figure 6 schematically illustrates reinforcement mechanisms in a slope or retaining wall, under application of a horizontal load. A three-dimensional geotextile composite material comprising a three-dimensional geotextile composite material (1) and a geogrid (2) is provided within the soil, preferable at multiple levels, to prevent sliding of a soil surface (8) within the slope.

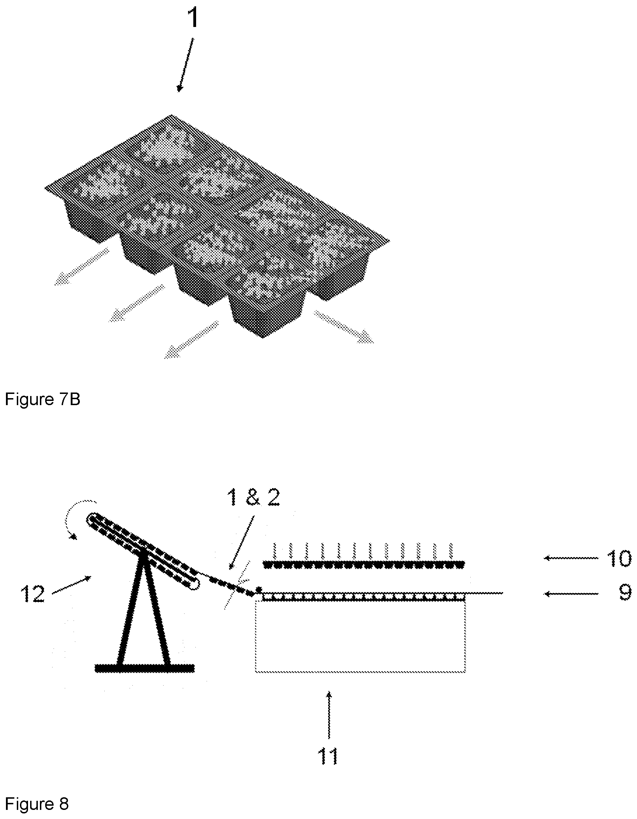

Figure 7 schematically illustrates a method of water drainage, for example on a parking or a roof garden. Figure 7A schematically illustrates a three-dimensional geotextile material (1). Figure 7B schematically illustrates a three-dimensional geotextile material (1) filled with soil. Filtration and separation are effectuated through the three-dimensional geotextile material (1). The three-dimensional geotextile material forms an effective medium for drainage having the ability to drain water more efficiently, for example where uniform sand with a size of for example 1 to 4 mm. The water filtered and separated from soil confined within the cell structures of the three-dimensional geotextile material can be drained horizontally in the directions of the arrows.

Figure 8 schematically illustrates a manufacturing process comprising two main stages, a pressing stage to form a three-dimensional geotextile composite material, and a winding and packaging stage. A two-dimensional geotextile composite material (9) comprising two-dimensional geotextile material and a geogrid connected (welded) to the two-dimensional geotextile material enters a molding machine (pressing machine). The two-dimensional geotextile composite material may be heated before entering the molding machine, in particular for high weights of the two-dimensional geotextile material. The molding machine comprises a male mold (10), also called upper jaw of the press machine, and a female mold (11), also called lower jaw of the press machine. The three-dimensional geotextile composite material is formed and then wounded using a winding and packaging machine (12).

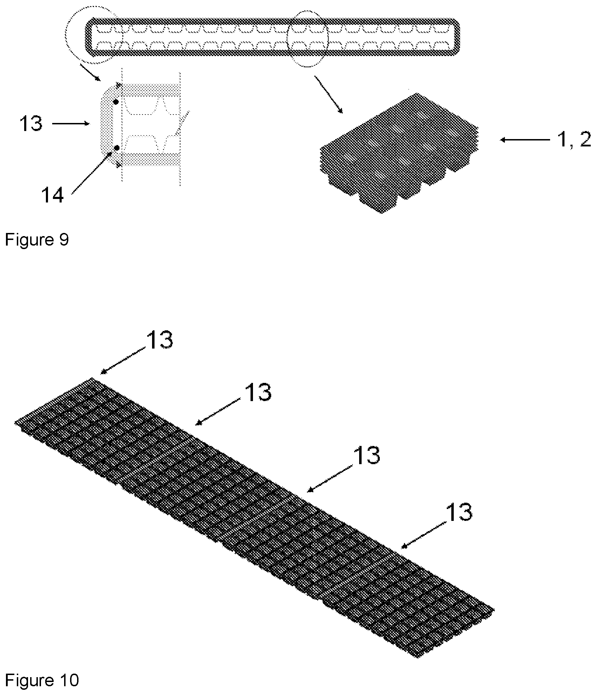

Figure 9 schematically illustrates more details about an embodiment of the winding stage of a three-dimensional geotextile composite material. The distance indicated by numeral (13) is variable. The distance, or length, of part (13) can be increased, by changing the position of axis (14), while winding progressive layers of three-dimensional geotextile composite material to ensure proper overlap, or stacking, of cell structures in successive layers during the winding process. The final shape of the roll after winding is also schematically illustrated comprising stacked layers of three-dimensional geotextile composite material comprising three-dimensional geotextile material (1) and a geogrid (2) connected (welded) to the three-dimensional geotextile material.

Figure 10 schematically illustrates the three-dimensional geotextile composite material of Figure 9 after unwinding, and the variable distance (13) which varies with each winding.

Figure (11) schematically illustrates another embodiment for the winding stage, resulting a square shape of the roll formed at winding. The three-dimensional geotextile composite material can be wound around a square frame defined by four axes (14). The distance (13) at each corner is variable. The distance (length) of parts (13) can be increased, by changing the position of axis (14) at each corner, while winding progressive layers of three-dimensional geotextile composite material to ensure proper overlap, or stacking, of cell structures in successive layers during the winding process.

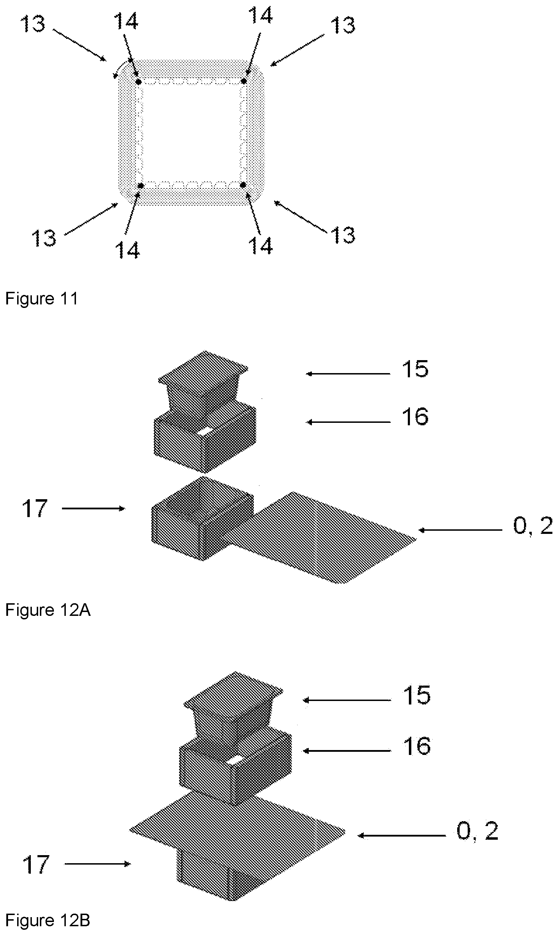

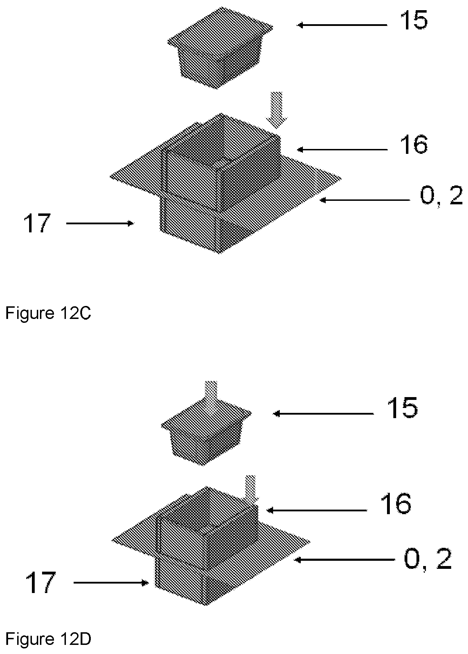

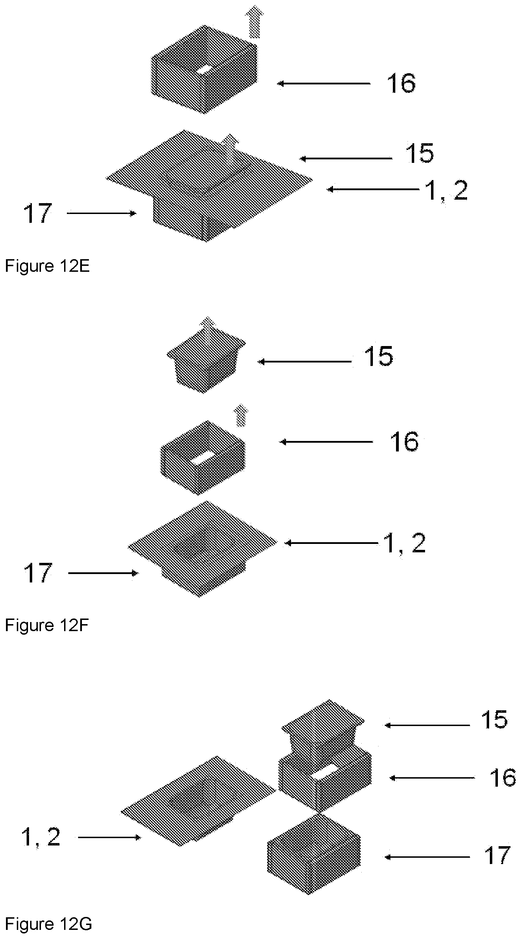

Figure 12 schematically illustrates the main parts of the shaping (compressing) unit, and sequential steps of the process for manufacturing a three-dimensional geotextile material by shaping a nonwoven layer of fibers into a three-dimensional geotextile material.

Figure 12A schematically illustrates a male mold for a single cell structure (15), a female mold for a single cell structure (17), a compression frame (16) for one single cell structure to fix the sides of the nonwoven layer of fibers (0) before shaping (pressing) the two-dimensional nonwoven layer of fibers into a three-dimensional geotextile material comprising a multitude of cell structures. A geogrid (2) may be connected to the nonwoven layer of fibers (0). The male mold (15), the female mold (17), and the compression frame (16) may be configured to include several cell structures.

Figure 12B schematically illustrates that a nonwoven layer of fibers (0) and a geogrid (2) are positioned between the male mold (15) and the female mold (17).

Figure 12C schematically illustrates that the compression frame (16) fixes the sides of the two-dimensional nonwoven layer of fibers (0) before shaping the two-dimensional nonwoven layer of fibers through the opening of the geogrid (2) into a three-dimensional geotextile material comprising cell structures (1).

Figure 12D schematically illustrates that the male mold for a single cell structure (15) is moved onto the two-dimensional nonwoven layer of fibers (0), which may be connected to a geogrid (2).

Figure 12E schematically illustrates that the male mold for a single cell structure (15) is pressed into the two-dimensional nonwoven layer of fibers (0), which may be connected to a geogrid (2), thereby shaping the two-dimensional nonwoven layer of fibers into a three-dimensional geotextile material (1).

Figure 12F schematically illustrates that the compression frame 16 is releases the nonwoven layer of fibers and that the male mold (15) is removed after shaping the two-dimensional nonwoven layer of fibers (0) into a three-dimensional geotextile material comprising cell structures (1).

Figure 12G schematically illustrates that the three-dimensional geotextile composite material comprising a three-dimensional geotextile material (1) comprising cell structures and a geogrid (2) has been provided after removing the three-dimensional geotextile composite material from the female mold (17).

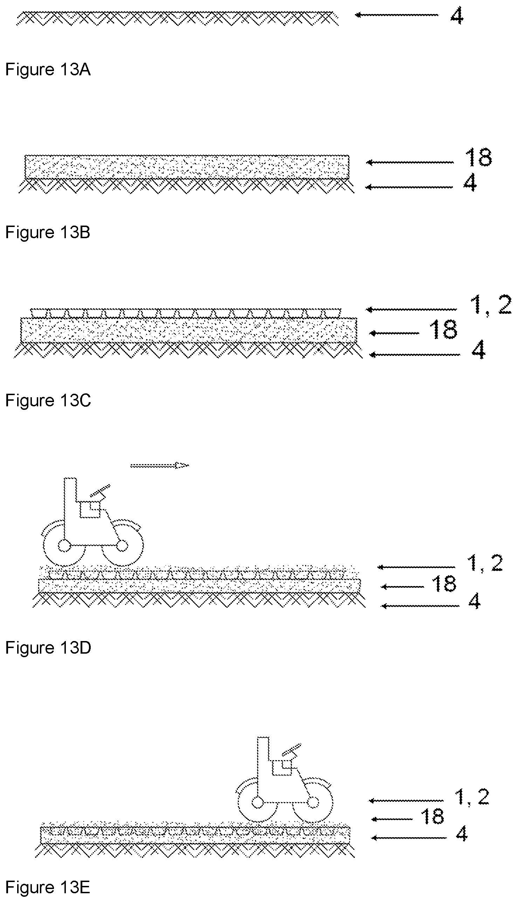

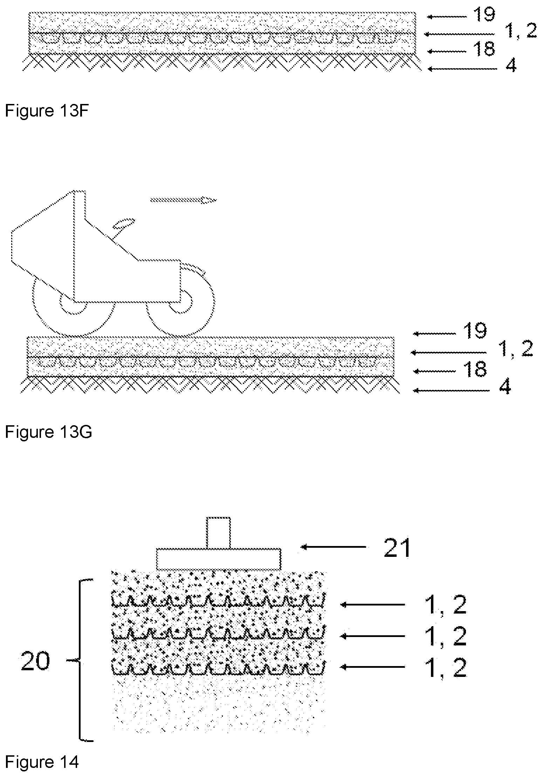

Figure 13 schematically illustrates an installation method on site in a road construction, under application of a vertical load.

Figure 13A schematically illustrates a subgrade soil layer (4), which may be leveled and compacted.

Figure 13B schematically illustrates a subgrade soil layer (4) and a soil foundation layer (18), for which mainly loose sand is used. A first portion of loose sand may be spread, for example with a thickness of 10 cm.

Figure 13C schematically illustrates the subgrade soil layer (4) and soil foundation layer (18) of Figure 13B, and a three-dimensional geotextile composite material comprising a three-dimensional geotextile material (1) comprising cell structures and a geogrid (2) placed on top of the soil foundation layer (18). Both sand and gravel material, also called aggregate, preferably with specified gradation, can be used to fill the cell structures.

Figure 13D and 13E schematically illustrates filling the cell structures of the three-dimensional geotextile material with sand and/or gravel material and slightly compacting the sand or gravel material by a small, relatively lightweight compactor, for example weighing 1000 kg or less. The cell structures of the three-dimensional geotextile material have sufficient flexural stiffness to enable that the cell structures remain open without too much deformation when being filled by sand or aggregate material. When the cell structures are filled with aggregate or sand material, the cell structures turn into solid bodies, which can be walked on, without being deformed, similar to walking on stones, which enables that the cell structures can penetrate the loose sand layer underneath.

Preferably, in the installation process, a weak or loose layer is present under the three-dimensional geotextile material before being installed. If the installation is assumed to be carried out on places with loose or very loose natural soil (SPT $\leq$ 4), there is no practical need to install the foundation layer of loose sand, as the cell structures can interlock directly with the loose subgrade and can then be filled with aggregate material or sand, and be compacted.

Once the cell structures have stabilized and take their final configuration inside the foundation (subgrade) layer, a subsequent layer of aggregate (base course or subbase) can be added and compacted at higher compaction pressures.

Figure 13F schematically illustrates the subgrade soil layer (4), soil foundation layer (18), three-dimensional geotextile composite material filled with sand and gravel materials, which has been slightly compacted, of Figure 13E, and a subsequent layer of aggregate, also called base course or subbase, (19).

Figure 13G schematically illustrates compacting the subsequent layer of aggregate (19) by a heavy weight compactor, for example weighing 15000 kg or more.

Figure 14 schematically illustrates reinforcement mechanisms in a foundation (20), under application of a vertical load by a construction (21) applied onto the foundation. A three-dimensional geotextile composite material is provided within the soil, preferably at multiple levels, comprising a three-dimensional geotextile composite material (1), each preferably with a geogrid (2) connected to the three-dimensional geotextile material.

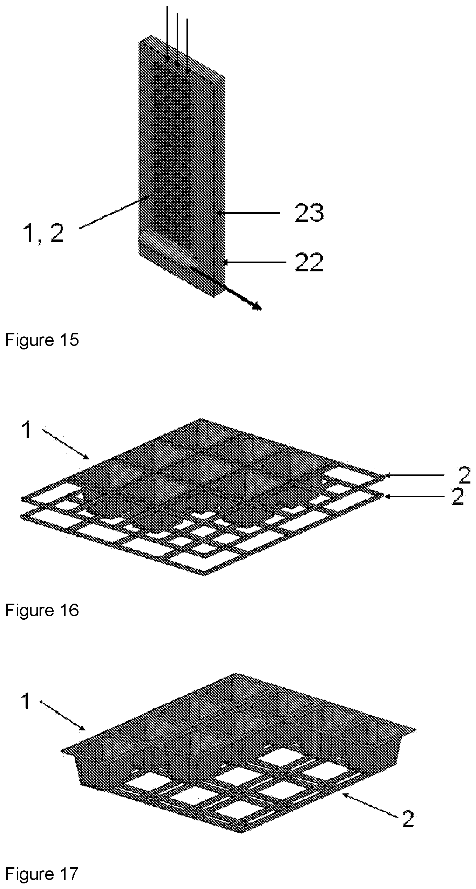

Figure 15 schematically illustrates a vertical drain for a concrete construction. The concrete construction comprises a concrete wall (22) and a layer of waterproofing material (23) connected to the concrete wall. A vertical drain comprising a three-dimensional geotextile material (1), preferably with a geogrid (2) connected to the three-dimensional geotextile material, is placed adjacent to the layer of waterproofing material (23) and may contain a horizonal drainage tube to discharge water.

Figure 16 schematically illustrates a three-dimensional geotextile composite material comprising a three-dimensional geotextile material (1) comprising bridging sections composed of the nonwoven layer of fibers between the openings of the cell structures connecting side walls of adjacent cell structures, a geogrid (2) connected to the first surface of the bridging sections comprised in the three-dimensional geotextile material and a second geogrid (2) connected to the outer surface of the base of the cell structures comprised in the three-dimensional geotextile material.

Figure 17 schematically illustrates a three-dimensional geotextile composite material comprising a three-dimensional geotextile material (1) comprising bridging sections composed of the nonwoven layer of fibers between the openings of the cell structures connecting side walls of adjacent cell structures, a geogrid (2) connected to the outer surface of the base of the cell structures comprised in the three-dimensional geotextile material, wherein each of the elongated members of the geogrid is composed of two adjacent strips.

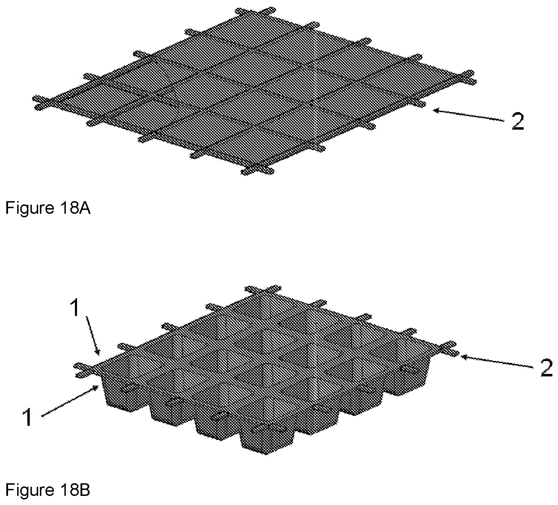

Figure 18A schematically illustrates a first nonwoven layer of fibers and a second nonwoven layer of fibers, and a geogrid (2) sandwiched between the first nonwoven layer of fibers and a second nonwoven layer of fibers.

Figure 18B schematically illustrates a three-dimensional geotextile composite material comprising a three-dimensional geotextile material, a second three-dimensional geotextile material and a geogrid (2) sandwiched between the second surface of the bridging sections comprised in the three-dimensional geotextile material and the first surface of the bridging sections comprised in the second three-dimensional geotextile material.

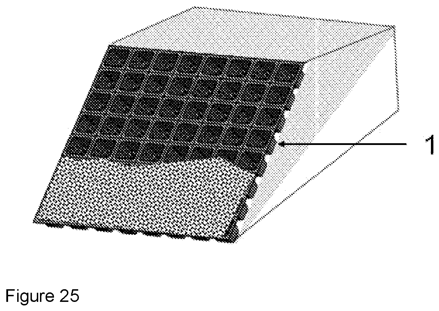

Figure 25 schematically illustrates reinforcement mechanisms for the protection of a slope. A three-dimensional geotextile material comprising a three-dimensional geotextile composite material (1) is provided to reinforce the slope to prevent erosion of soil from the slope. The cell structures comprised in the three-dimensional geotextile composite material can be filled with soil.

Geotextile materials are used in various engineering applications in infrastructure projects. The most important of these applications are filtration, drainage, separation, and reinforcement. The goal is to promote the product from its current flat form to a 3D-shape to enhance its performance in various uses, especially in soil reinforcement. Also, it can be better alternative for many geosynthetic materials in many applications and it can be utilized more effectively. The transition to the 3D shape, while maintaining the same flat dimensions, i.e. maintaining the same width and length of the flat nonwoven layer of fibers, can be achieved by thermal pressing, also called molding. Moreover, the mechanical and hydraulic properties of the product, i.e. the three-dimensional geotextile material, will stay within the same general range of known geotextile materials. The final 3D shape can be produced alone, or welded with geogrid materials in different ways. Please see Figures (1 to 4).

The main advantage is to make a qualitative improvement in the performance of geosynthetic materials used in soil reinforcement and many other applications. It is well known, that geogrid materials are specially used in soil reinforcement works. Specifically, they are used under roads, buildings, reinforced slopes, and retaining walls.

The process of soil reinforcing by geogrids depends mainly on three mechanisms: soil confinement, load redistribution, and tensioned membrane effect. These mechanisms will be discussed in more details in the next paragraphs. To achieve the goal of soil reinforcement, the reinforcing materials must have two basic characteristics: the ability to interfere with the soil as much as possible (soil geosynthetics interlock), and it should have sufficient stiffness (stiffness means the resistance of the product to deform under load ($EA = N/\varepsilon$)) so that it can be easily stimulated. The currently available materials may possess one of these two characteristics while the other property is relatively limited. The three-dimensional geotextile material nominated here, is to combine these two characteristics together.

Some specialists in this field, argue that improving the engineering soil stiffness using geogrid in some applications such as roads, mainly requires greater interference between the soil and the grid. While geogrid stiffness is less required in such applications.

The application is characterized by being the first to propose manufacturing of non-woven geotextile in a 3D shape by heat press method to be used in different civil engineering applications and infrastructure works.

There are some products made of geotextile materials that take a 3D shape, but they are not manufactured by direct thermal pressing, and do not have the features and the potential efficiency of the current three-dimensional geotextile material. An example of those products, geotextiles cut in form of slices and re-welded to take a third dimension. Obviously, they are different in manufacturing technology.

There are also other products made of materials, other than geotextile, and thermal pressing is used to give them a spatial shape. They also differ from the current three-dimensional geotextile material by the product which was made of (mostly rigid plastic panels).

There are also products made of geotextile materials, but they do not have a 3D shape.

All these products differ either by manufacturing technology, by the modified product, or by having a third dimension. As a result, their characteristics and their end uses do not comprise the potential characteristics and all uses of the three-dimensional geotextile material.

The 3D non-woven geotextile is based on the transition from the flat form of geotextile materials (2D non-woven geotextile) to the spatial form (3D non-woven geotextile). This new spatial form can be adjusted in terms of its dimensions, such as cell depth, other different geometries of the cell, or the distance between each two adjacent cells. So that, these adopted dimensions satisfy the efficiency of the product and the possibility to manufacturing and packaging, and facilitate its use as well. The geotextile product is usually manufactured from polypropylene, or polyester fibers, or one of them with a percentage of low melting fibers, preferably polyethylene fibers or polypropylene fibers. And the three-dimensional geotextile material can be composed of a single element, which is a geotextile alone, and in this case, it has the same advantages of the flat geotextile in addition to high ability to interfere with soil. Otherwise, it can be combined with geogrid materials, where the overall stiffness of the final product can be controlled by the stiffness of the used geogrid. In the last case, three-dimensional geotextile plays the main role to achieve better interface with the soil, while geogrid plays a key role in increasing the overall stiffness of the final product. Figures 3 to 4 illustrate some forms of combination of geogrid with geotextile.

In order to have a complete imagination of the mechanisms that the new three-dimensional geotextile material will behave according to, it is necessary at beginning, to explain in details the mechanisms of the soil reinforcing using the geogrids. According to the engineering community interested in this field, there are three main mechanisms through which the soil is reinforced:

The interlock between aggregates and mesh will contribute to restrict the movement of these aggregates and confining them laterally. And thus, increasing the stiffness of the reinforced layer. A process in which randomness plays a major role. As a better interference between the mesh openings and the aggregates depends on several factors, including the size of the aggregates, the opportunity to arrange them in a certain way, the dimensions of the mesh openings, and the shape of these openings. Considering the fact, that this grid is only two-dimensional reduces the possibility of interference, as the third dimension is often does not exceed 3 mm. Also, placing the mesh on well-compacted soil may reduce the chance of interlock. The use of engineered soil of small grain sizes with relatively large openings grids reduces the effect of the confinement process. since increasing the contact points between the grains of soil within the mesh opening gives a greater opportunity for movement, and thus causing less effect of the confinement process. Therefore, it is recommended usually to use a certain grain distribution to achieve a higher chance of better interlock.

In this regard, some geogrid manufacturers have argued that some triangular openings grids have the ability to confine gravel and distribute the load better than other forms of openings (such as square or rectangular). And such a perception can be relatively acceptable, as the rigidity of the triangular shape plays an important role in reducing the deformations of the mesh under the load influence. Actually, practical investigation remains the most acceptable method to determine the accuracy of this phenomenon.

The mechanism of "load distribution" which depends to some extent on the previous mechanism. As it is known, that the angle at which the load spread within the reinforced layer, is related to the stiffness of this layer, which is in turn related to the mesh ability to confine gravel and refuse the deformation.

The mechanism of tensioned membrane depends on fixing the geogrid at the loaded area edges by the overburden soil. This mechanism requires large deformations in the soil body to start activated. And this may not be allowed by settlement limits in different engineering facilities.

How does the new three-dimensional geotextile material work? The cells in the new three-dimensional geotextile material can effectively confine the soil much more than thin ribs of geogrid. Accordingly, the thickness of the interlocked soil layer becomes much larger. Hence one can imagine the difference between a product with just only a 3 mm third dimension and another product with a 60 mm. Actually, the soil inside the cell will be completely confined, as it is retained between the cell walls from all arounds and the applied load from the upper side, therefore it cannot escape in any direction.

The reaction of the cell under the effect of loading mainly depends on both, where the geogrid is laminated on the cell, and the way of applying the load relative to the cell. For the geogrid, it can be laminated directly opposite the upper surface as shown in Figure 3, or it can be fixed on the lower plane as shown in Figure 4. Additionally, the load can be either applied vertically above the cell (for example, truck loads over reinforced road pavement), or it can be applied in horizontal plane as in the case of constructing slopes and retaining walls. Accordingly, it is possible to distinguish between the following cases in the mechanism of reaction of the cell to the applicable load:

The case of vertical load and the presence of geogrid in the upper plane as per Figures 3 and 5. The cell transfers the load in this case to the surrounding geogrid ribs just as the concrete slab transfers the loads to the surrounding beams. And that would cause a greater stimulation of these geogrid elements, especially with the possibility of involving geogrids with high tenacity, such as those made of polyester materials.

Also, in the same above case (vertical load and geogrid in the upper plane) the current proposed design allows the soil inside the cell to behave as a single mass as if it were a small foundation. The dimensions of this foundation are presented through the dimensions of the cell base. Thus, the cell can better distribute the load over the subgrade soil.

As a result, the cell can act as a foundation by transferring the load to the layer beneath it. Simultaneously, it can act as a portable slab that stimulates the surrounding geogrid elements. Actually, the stiffness of the soil fills the cell, and the stiffness of the subgrade soil, can play the key role if the cell will act as a foundation transferring the load, or as a roof slab carried on the surrounding geogrid elements. In reality, the higher stiffness of the surrounding soil, the more potential that the cell will act as a foundation more than work as a slab and vice versa.

When the cell is subjected to a vertical load and the geogrid is laminated at the lower plane of the cell, please see Figure 4 and 5. In this case the three-dimensional geotextile material will work as a slap on grade, where the main tension elements are presented by the geogrid, and the soil between the cells (at the upper level) act on compression. To make this mechanism more evident, a strong bond must be ensured between geogrids and geotextile materials.

When exposing the cell to a horizontal (in plane) load, as in slopes or retaining walls applications, Figures 2,3 and 6, the cell will resist the pull-out force effectively. Since it has a third dimension, the cell will need much greater force to slide than that required by a thin thickness geogrid. This attributed to the fact that the passive pressure mobilized in front of the cell as a reaction of the pull-out, will be highly greater than that mobilized by geogrid.

Is the stiffness of the geotextile cells sufficient to react as per previous mechanisms?

This question can be answered by highlighting the following points:

Non-woven geotextiles were originally and still used in soil reinforcement works, especially in roads and slopes, since they can tolerate the tensile forces.

Cell stiffness can be increased by increasing the weight of geotextile used in manufacturing. The tensile strength in proposed weights reaches 35 kN/m or 70 kN/m and the elongation after manufacturing expected to be less than 50%. Additionally, the geotextile will be exposed to heat and thus melting some of the low melting fibers, preferably polyethylene fibers or polypropylene fibers, will increase its stiffness.

The 3D non-woven geotextile alone may approach, in terms of stiffness, some geogrid products with low stiffness, such as those have less than (20 kN/m) tensile strength.

Some research has shown that the effect of geogrid stiffness is slight in soil stabilization applications. Especially those geogrids made of polypropylene, while stiffness plays an important role in case of soil reinforcement applications.

The dimensions of the cells are relatively small compared to the planar geotextile, and they are subjected to tension according to the three directions. Moreover, due to its spatial shape and interfering with the soil, cell elements will be more restricted, and that makes them able to transport loads more effectively. For the same case of soil layer deformations (or settlement) the shorter (restricted) element is better mobilized than the longer (relatively free) element.

There are several types of drawings which will be included in the application:

The drawings related to explaining the idea of the three-dimensional geotextile material, types of possible products, and the reinforcement mechanisms:

Figure 1 Illustrate the idea of the three-dimensional geotextile material.

Figure 2 product type, the geotextile alone in the 3D form.

Figure 3 product type, Geotextile in 3D form with geogrid welded below the upper face of the geotextile.

Figure 4 product type, Geotextile in 3D form with geogrid welded on the bottom face of geotextile.

Figure 5 reinforcement mechanisms, vertical load application.

Figure 6 reinforcement mechanisms, horizontal load application.

Figure 7 Illustrate the method of water drainage.

The product type shown in Figure 4 is suitable to be used if the load was applied vertically, while the other two types in Figure 2 and 3 can be used in both vertical and horizontal applied loads.

The drawings explain manufacturing process are shown in Figures 8 to 11.

Figure 8 shows an outline of manufacturing process which goes through two main stages, the pressing stage, and the winding and packaging stage.

Figure 9 shows more details about the winding process, as well as the variable distance indicated by the number 13. The length of part number (13) increases in progress to ensure proper overlap of cells in successive layers during the winding process. The final shape of the roll after winding is also shown in the same figure.

Figure 10 shows the product after unrolling, and the variable distance referred to in number (13).

Figure 11 shows another proposal for the winding process (square shape).

Figure 12 shows the main parts of the compressing unit, and pressing sequence steps. These steps can be modified.

Figure 13 shows the drawings related to the installation method on site.

Explanation of the numbers of drawings:

No. (0) two-dimensional geotextile product.

No. (1) three-dimensional geotextile product.

No. (2) geogrid reinforcement mesh.

No. (3) sand or gravel layer with a total thickness of 20 cm before compacting. 10 cm under the cell system and 10 cm above the cell system, the thickness after compacting may reach 12 cm.

No. (4) subgrade soil layer.

No. (5) the gravel base or subbase layer.

No. (6) bituminous asphalt layer.

No. (7) car tire represents the applied load.

No. (8) soil sliding surface within the slope.

No. (9) welded geotextile with geogrid (Geocomposite) entering the pressing machine.

No. (10) The upper jaw of the press machine.

No. (11) Lower jaw of the press machine.

No. (12) Winding and packaging machine.

No. (13) Variable distance to ensure overlapping cells in successive layers.

No. (14) one of the four axes of the winding.

No. (15) single cell pressing head (male).

No. (16) The compression frame for one cell to fix its sides before pressing, and it may be one frame that includes several cells.

No. (17) single cell pressing base (female).

The three-dimensional geotextile material is based on the transition of the non-woven geotextile product (2D non-woven geotextile) to become three-dimensional (3D non-woven geotextile) so that its role is promoted more in different engineering uses. Specially, its ability to contribute to the reinforcement and soil retention. Geotextiles are usually produced in the form of rolls with a width ranging from 3 to 6 meters, and lengths ranging from 50 to 100 meters. They are made of polypropylene, polyester, and polyethylene fibers. Or by mixing two of these components together in a certain proportion. Also, they are produced in different weights ranging from 70 to 1500 $g/m^2$. And by changing the weight, their mechanical and hydraulic properties will change as well. These properties must meet the requirements of a specific project, these requirements are related to: the application for which the geotextile will be used for, the type and size of the available soil and its chemical conditions, the amount of the runoff need to be drained, and to the loads that the geotextile is exposed to during installation and service.

The manufactured new three-dimensional geotextile material may be in form of semi-rectangle rolls, please see Figure 9, so it must have a specific design. This design should allow to this new 3D-shape to be produced and winded without distortion in its third dimension. The potential dimensions of the final roll are 4 meters width and up to 50 meters length. Specific geotextile weight can be selected to achieve certain mechanical and hydraulic properties (same like 2D geotextiles). The initially proposed weight to be used in the new three-dimensional geotextile material is 400 $g/m^2$, with about 4-5 mm thickness. Such weight can achieve AASHTO M288 requirements for roads applications. The impact of the manufacturing process (reshaping) on the original geotextile properties will be discussed in coming paragraphs.

The three-dimensional geotextile material can be welded to the geogrid according to one of the two methods shown in Figures 4 and 3. As it is clear, it comprises a repetitive cell model, each cell has two in-plane dimensions ranging from 100 to 150 mm, and a third dimension of not less than 40% of the largest of the previous two dimensions. These dimensions were selected so that, an effective soil confinement can be secured inside and between the cells. The distance between each two adjacent cells ranges from 10 to 30 mm. This distance increases with depth as shown in Figure 1 whereas all the proposed dimensions of the cell are estimated in mm. Loose sand is mainly used as a soil foundation layer under the product as shown in Figure 13 step 2. While both sand and gravel materials (with special gradation) can be used to fill the cells.

The three-dimensional geotextile material which is characterized by its 3D-shape reinforced with the geogrid element, can combine the characteristics of geogrid and the characteristics of the upgraded geotextile, so it can achieve higher efficiency in various uses. There are different products available in the market, but they are limited to one application and not made of geotextiles. For more clarification about the advantages of this three-dimensional geotextile material, we can take its used under the road as an example, which has the following functions:

Filtration and separation (through the geotextile).

Have the ability to drain water more efficiently, where the uniform sand with a size of 1 to 4 mm forms an effective medium for drainage, please see Figure 7.

Have the ability to reinforce the base soil layer through a better soil confinement mechanism, and the geogrid elements can be effectively mobilized.

Comparison of the three-dimensional geotextile material with the products available in the market:
The effectiveness of the three-dimensional geotextile material performance compared to some products available in the market, can be illustrated by the following three cases:
Comparing between the 2D geotextile laminated with geogrid (geocomposite) and the three-dimensional geotextile material when be used with sandy soil as a reinforcing layer. Actually, for the geocomposite, the reinforcing effect would be highly limited, because the sand confinement which is dependable on the thickness of the geogrid elements will be limited. And the movement of the geogrid under the influence of the applied load becomes highly easy comparing to the restriction achieved by the spatial interference of the new three-dimensional geotextile material. The thickness of the layer affected by the reinforcement in the case of a 2D product is limited and remains lower than that of a 3D shape (since the thickness of the soil layer, which is affected by reinforcing materials, increases with the increase in the thickness of the reinforcing element itself).

If gravel materials with a certain gradient are used instead of sand to increase interference with geogrid, the presence of 2D geotextiles in its current position under the geogrid (laminated to the lower surface of geogrid) will reduce the potential for interlock. Additionally, the permeability of the medium will be less because of using a well graded aggregate.

Another example, comparing the three-dimensional geotextile material with the geocell which is used in slope erosion control application. It can be seen that both products are three-dimensional, but the three-dimensional geotextile material has the property of filtration which is not available in the geocell. Moreover, the three-dimensional geotextile material can bear a much higher tensile force than the geocell which could have ultimately a tensile of 10 kN/m. Therefore, it needs to install pins to disperse the soil sliding force. Getting attention that the pins installation is not possible over the geomembrane insulation layer in the landfills capping layer. In contrast, the tensile capacity in the three-dimensional geotextile material can reach 100 kN/m, and it can keep continue over the entire slope since it has a long length and does not require a connection between the different panels (as in geocells) to extend over the entire surface of a long slope. Also, it does not need the presence of pins to disperse the sliding force.

Third example to show the effect of the spatial shape, is when the new three-dimensional geotextile material proposed as a reinforcement to stabilize the slopes and retaining walls. Confidently the cells will show higher resistance against the pulling out force in this case, consequently the required reinforcement anchorage lengths can be decreased. Accordingly, walls with higher heights and a greater degree of reliability can be built with such reinforcing elements.

The potential changes in geotextile mechanical and hydraulic characteristics due to reshaping process:
The product (element No.9 Figure 8) will enter the pressing machine and exit with the same dimensions at which was entered. That means, the roll enters with a width of 4 meters and comes out with a width of 4 meters, enters with a length of 50 meters and exits with a length of 50 meters, nevertheless with gaining a third dimension.

The third dimension is gained by pressing the product and exposing it to heat to take the new shape. That means, the new shape will be attained due to decreasing in the geotextile thickness, which can be controlled at the beginning by selecting the geotextile that can yield the final required thickness.

But what may happen to the other characteristics of the new resulted product?
For example, the process of tensioning while being pressed to obtain the 3D-shape causes the geotextile openings of the original product to increase. In contrast the heat will melt some fibers (polyethylene melts at 120°C below the melting point of polypropylene that melts at 160°C, thus the size of the previous openings will be reduced again, the pressing temperature is usually around 120°C. Moreover, the spatial shape increases the total surface area of the product, adding to the original flat area a lateral area that can be equivalent to four times the area before formation. Consequently, that will increase the ability of the product to drain water due to the increase in the drainage surface.

Coming to the mechanical properties, such as tensile strength, it is expected to be increased after manufacturing due to the melting of some fibers. All that happens in this regard, is just that the material was reshaped differently. As the thickness decreases the other dimensions increase, thus that the unit area weight which mainly control the tensile strength still the same.

All these characteristics can be controlled by choosing the right unit area weight (gsm) and the right polyethylene fiber ratio to reach the desired values.

As for the property of durability, the product after manufacturing will not differ much from its pre-manufacturing properties, because the 2D geotextile is usually exposed to higher levels of heat to obtain different hydraulic and mechanical properties without affecting its durability.

Actually, it can be recognized between two types of tests that can be performed on 3D-shape geotextile: Tests related to its mechanical and hydraulic properties. And tests related to estimate the improvements can be achieved upon the actual using of the three-dimensional geotextile material. And obviously, the second type of tests is the purpose for which this new material was invented. To investigate these two types, small laboratory and large field samples must be taken. The laboratory tests can be somewhat mimicking current tests carried out on a 2D geotextile. However, determining the improvements can be achieved in field performance will require special tests, and these tests will help to make the available current products and the new 3D-shape geotextile possible to be comparable. In the following paragraph, the most important investigations need to be carried for this purpose, will be explained.

Investigations of the new 3D-geotextile efficiency and its ability to improve the field performance: Firstly, investigating the effect of the product in improving the performance of road foundation layers, and its ability to redistribute the vertical load.

For the purpose of studying the effect of geogrids on improving the road performance, and reducing the potential deformations, and to find the thickness of pavements which can be saved due to incorporating the geogrid, the (APT) accelerated pavement testing method is usually performed. During this method, the geogrid is considered as a part of the base or subbase layer, and according to AASHTO 1993 equations (1 and 2) mentioned below the (LCR) layer coefficient ratio can be determined, this coefficient will determine the contribution of geogrid in the total structural number of the road pavement.

$$\text{Log}_{10}(W_{18}) = Z_R \times S_0 + 9.36 \times \text{Log}_{10}(SN+1) - 0.20 + \frac{log_{10}\left(\frac{\Delta pSI}{4.2-1.5}\right)}{0.4+\frac{1094}{(SN+1)^{5.19}}} + 2.32 \times \log_{10}(M_R) - 8.07$$

Eq. (1)

$$SN = a1D1 + a2D2m2.LCR$$

Eq. (2)

When it comes to the new three-dimensional geotextile material, the product can be assumed as part of the subgrade layer and not the upper base or subbase layers. Then the performance will be evaluated through the increase achieved in (MR) value which will be re-evaluated by considering the reinforced layer. The thickness of this reinforced layer is about 12 cm after compaction will be considered as a part of the total subgrade thickness within which the traffic load is expected to be distributed. Accordingly, the costly and longtime APT tests may not be needed. Also, there is no need to use special aggregate for the reinforcing layer, because this layer will be considered as a part of the natural soil (subgrade) which we usually do not create.

Secondly, investigating the effect of the three-dimensional geotextile material in improving the pull-out resistance: For this purpose, a laboratory or field large-scale test can be performed. The tests can be carried out on the geogrid and on the new 3D-shape geotextile composite to explore the difference in performance.

Thirdly, investigation the performance of the three-dimensional geotextile material to drain the water comparing to some available products. This investigation can be applicable for roof garden system, for example.

Three-dimensional geotextile material Manufacturing Process: Small samples of the product were manufactured. In general, the manufacturing process goes through the following stages: The stage of manufacturing the geogrid according to certain pattern satisfy the three-dimensional geotextile material design requirements. The distances between the transverse geogrid elements may not be fixed along the roll but will have a specific special pattern. The shape of this pattern governs the progress of cells formation and winding method to be adopted. In fact, winding using the ordinary circular core will not be effective in the case of manufacturing the new three-dimensional (composite) geotextile material.

It has been agreed with the manufacturers on their ability to produce geogrid as per the new pattern. Geogrid and geotextile lamination can be locally laminated, ether thermally or by adhesive.

The stage of cell formation may require heating the product before pressing it with the mold designated for that. Figure 8 and numbers (9 and 10) show this stage, the width of one advancement step (the width of the pressing footprint) can be 60 cm while the width of the roll is 4 meters. Then the product will be winded and packaged.

Figures 8 and 9 also show the proposed method of winding, as this method enables the product to be winded for perfect interlock between the cells of the different layers. The transverse distances between each group indicated by number (13) in Figure 9 may need to be increased to cover the shortages in the length of the roll. This shortage caused by the increasing in winding diameter while a new layer added. This compensation in length assures the cells remain overlapping with each other while continuing the winding process as in Figure 9. The shortage in the length of the next layer from the previous layer is ($\delta = 2\pi T$) where T is the thickness of the geotextile after fabrication which can be about 4 mm. The distance specified by the element with the number (13) for each layer may be adjusted practically. The product may be winded around a square frame of about 1 m side length, kindly see Figure 11. One more suggestion is that the winding perimeter can be decreased during the winding process.

In case of square frame and after completing the winding, the roll can be separated from the internal winding rods, see No. (14). Then the roll is folded so that the opposite upper right and lower left corners applied onto each other to return to the previous shape as in Figure 9. As a result, one package will be 2 m in width and 4 m in length, and about 20 cm in thickness. To maintain the final shape after folding, a rectangular cardboard frame is inserted manually as a core of the package and then the product is packed.

The winding stage is one of the most critical stages in manufacturing process. The speed of production can be within the economic requirements of the production process.

The process of shipping the product to the project site requires the product to be manufactured in such a way that allows large quantity of it to be taken within a single shipment. And that would reduce the cost of transportation. In the previous proposed winding models, the transportation costs of one square meter remains within the minimum limits.

On-site installation process:

As shown in Figure 13, steps (1) through (6) show the product installation process and they are as follows:

Step (1) leveling and compacting the subgrade soil if possible.

Step (2) spread the first portion of the loose sand with a thickness of 10 cm.

Step (3) place the 3D shape non-woven geotextile over the sand layer.

Step (4) Fill the cells with sand or aggregate.

Step (5 and 6) Instill the cells in soil by slight compacting using a small compactor.

It is important to get the attention that the product cells have a sufficient flexural stiffness that enables it to stay open without deforming while being filled by sand or aggregate materials. And this cells response has been proven by the primary cells that have been manufactured. Actually, this flexural stiffness resulted from the melting of low melting fibers, preferably polyethylene fibers or polypropylene fibers, in addition to the cell shape design. Without this property, the proper filling process may not be that easy.

When the cells are filled with aggregate or sand materials, they turn directly into solid bodies. It can be walked on them, without being deformed same like walking on stones. And that will make it able to penetrate the loose underneath sandy layer.

As shown, the installation process requires the presence of a weak or loose layer under the product before being installed. If the installation assumed to be carried out on places with loose or very loose natural soil (SPT $\leq$ 4) (sabkha soils), Practically, there is no need to install the foundation loose sand layer. As the cells can be interlock directly with the loose subgrade, then filled with aggregate material or sand, and start to be compacted gradually. Once the cells stabilized and take the final configuration inside the foundation (subgrade) layer, a subsequent layer of aggregate (base course or subbase) can be added and compacted under higher compaction pressures.

In most projects, the degree of compaction of the subgrade soil is not usually verified. but in this case the degree of compaction of the spatial reinforced layer, must be ensured so that it is not less than 95% of the maximum dry density (MDD). A field trial has been conducted on a handmade spatial sample by cutting and gluing (with different shape) and this trial revealed that this degree of compaction can be reached with ease.

In case of using a loose layer under the product, it is preferable to be a sand layer so that small size grains sand can easily fill the space between the cells. If a drainage layer is required, then a sand with a uniform size of 4 mm is recommended.

In order to fill the cells with special aggregate, the gradation of this aggregate must be selected so that random voids do not occur within the filled soil. Actually, the chance of forming voids becomes higher at the edges and in the corners of the cells. In all cases, fine sand can be used without any problems. But if it is necessary to use special aggregate, a trial firstly must be made to assure that the aggregate gradation fits with the shape of the cell. Additionally, the required minimum percentage of fine sand to fill the voids can be investigated through some trials. As mentioned earlier, this layer will be considered as a part of the subgrade layer and therefore there are no specific requirements on the gradation of these materials.

In some applications, such as the landfill covering system, the spatial product can be placed directly above the geomembrane without any soil layer underneath. Thus, the spaces formed between the cells will play an effective medium in draining the water. In this application the product is used as an erosion control to protect the face of the slope, and as a drainage medium as well. A roof garden system is another example for such use.

Developing a (2D non-woven geotextile) with all kinds of raw materials made from, to become a (3D non-woven geotextile) by exclusively a heat pressing (whether it is a pneumatic or hydraulic press). Whether the 2D product is welded to/ or without geogrids. Or even if the reinforcing elements are integrated into the 2D geotextile. Or the geogrid is going to be welded after the 3D non-woven geotextile has been formed.

A winding apparatus for circular winding of a three-dimensional geotextile material and for a roll of three-dimensional geotextile composite material according to claim 1 is provided. Advantageous further developments of the winding apparatus are defined by the dependent claims.

A roll of a material is generally composed of subsequent windings of the material on a circular core, for example on a cardboard tube or on a plastic tube, wherein the diameter of each subsequent winding is increased by two times the thickness of the material to be wound.

The three-dimensional geotextile (composite) material may in principle be wound into a roll, wherein the diameter of each subsequent winding is increased by two times the thickness of the three-dimensional geotextile (composite) material, which is mainly defined by the depth of the cell structures comprised in the three-dimensional geotextile (composite) material. However, due to the relatively large thickness of the three-dimensional geotextile (composite) material, the roll diameter for a certain length of the three-dimensional geotextile (composite) material may become impractically large and may not fit in a container or in a truck. When the roll diameter would be restricted to fit in a container or in a truck, then the length of the three-dimensional geotextile (composite) material contained on the roll may become too small for intended applications.

In known winding apparatuses, the cell structures comprised in the three-dimensional geotextile (composite) material in consecutive windings on a roll can not be stacked into each other, as the increase in circumference of the roll being wound will not match the length dimension of one or more cell structures comprised the three-dimensional geotextile material. Deforming the three-dimensional geotextile material by stretching the three-dimensional geotextile material, such that the cell structures comprised in the three-dimensional geotextile (composite) material in consecutive windings on a roll could be stacked into each other, will not be possible due to the high tensile strength of the three-dimensional geotextile (composite) material, especially when the three-dimensional geotextile composite material comprises a geogrid.

There is thus a need for an improved winding apparatus which enables to wind a sufficient length of a three-dimensional geotextile (composite) material, in particular at an acceptable roll diameter.

The object is solved by a winding apparatus for winding a roll of a three-dimensional geotextile material at a constant outer diameter of the roll, the three-dimensional geotextile material comprising a multitude of cell structures is provided, the winding apparatus comprising a first means for rotating and a second means for rotating, first arms, each first arm having a first endpoint and a second endpoint, the first endpoint of the first arms connected to the first means for rotating, wherein the first arms extend in a radial direction from the first means for rotating, second arms, each second arm having a first endpoint and a second endpoint, the first endpoint of the second arms connected to the second means for rotating, wherein the second arms extend in a radial direction from the second means for rotating, and elongated strips extending from the second endpoint of the first arms to the second endpoint of the second arms, each elongated strip spaced from each adjacent elongated strip for receiving the cell structures comprised in the three-dimensional geotextile material, wherein the first arms and the second arms are configured to be reduced in length during winding of the roll of three-dimensional geotextile material, which enables to provide a roll of three-dimensional geotextile material having an acceptable length of the three-dimensional geotextile material, in particular at an acceptable roll diameter.

The winding apparatus according to the invention enables to load more three-dimensional geotextile material in a container or in a truck, due to the increased length of the three-dimensional geotextile material on the roll at a given roll diameter.

The winding apparatus according to the invention enables to wind a three-dimensional geotextile material such that the cell structures comprised in the three-dimensional geotextile material in consecutive windings can be stacked within in each other. As the cell structures comprised in the three-dimensional geotextile material are stacked within each other, each subsequent winding of the three-dimensional geotextile material on the roll does not increase the roll diameter by two times the thickness of the three-dimensional geotextile material, but only by two times the thickness of the nonwoven layer of fibers comprised in the three-dimensional geotextile material, in particular by the thickness of the bridging sections composed of the nonwoven layer of fibers comprised in the three-dimensional geotextile material.

The winding apparatus comprises elongated strips extending from the second endpoint of the first arms to the second endpoint of the second arms, each elongated strip spaced from each adjacent elongated strip for receiving the cell structures comprised in the three-dimensional geotextile material. Each elongated strip may be advantageously spaced from each adjacent elongated strip at regular intervals for receiving the cell structures comprised in the three-dimensional geotextile material, to enable that a three-dimensional geotextile material wherein all cell structures have the same length, for example in a repetitive cell model, can be wound efficiently.

The three-dimensional geotextile material to be wound on the winding apparatus may comprise bridging sections composed of the nonwoven layer of fibers between the openings of the cell structures connecting side walls of adjacent cell structures, the bridging sections having a first surface in a plane defined by the openings of the cell structures and an opposite second surface.

The width of the bridging sections defines the distance between (each of) two adjacent cell structures. The width of the bridging sections may be varied, but ranges preferably between from 10 to 30 mm.

The winding apparatus comprises elongated strips extending from the second endpoint of the first arms to the second endpoint of the second arms, each elongated strip spaced from each adjacent elongated strip for receiving the cell structures comprised in the three-dimensional geotextile material. The elongated strips may have a width which is equal to or less than the width of the bridging sections comprised in the three-dimensional geotextile material. The second surface of the bridging sections in the first winding of the roll will come in contact with the elongated strips. The second surface of the bridging sections in the second winding of the roll will come in contact with the first surface of the bridging sections in the first winding of the roll. The second surface of the bridging sections in any winding of the roll will come in contact with the first surface of the bridging sections in the previous winding of the roll. The elongated strips may have a width between 10 mm and 30 mm.

The cell structures comprised in the three-dimensional geotextile material in any winding can be stacked within the cell structures comprised in the three-dimensional geotextile material of the previous winding. The winding apparatus according to the invention reduces the diameter of previous windings on the roll being formed by reducing the length of the first arms and the second arms during winding of the roll of three-dimensional geotextile material. As already mentioned, deformation of the three-dimensional geotextile material by stretching the three-dimensional geotextile material will not be possible due to the high tensile strength of the three-dimensional geotextile (composite) material, especially when the three-dimensional geotextile composite material comprises a geogrid, but it is considered that the three-dimensional geotextile material can be compressed to a sufficient extend upon reducing the diameter of previous windings on the roll. The one or more side walls of the cell structures comprised in the three-dimensional geotextile material allow some bulging effect to accommodate for the compression by the reduction of the diameter of previous windings on the roll. The flexibility of the cell structures enables that the cell structures can be restored to their original shape after unwinding or upon being filled with particulate matter, such as soil, clay, sand and/or gravel.

The winding apparatus comprises first arms and second arms which are configured to be reduced in length during winding of a roll of three-dimensional geotextile material. The first arms and the second arms may be configured to be reduced in length simultaneously during winding of the roll of three-dimensional geotextile material, preferably upon completion of a winding. After completion of a winding on the roll of three-dimensional geotextile material, the length of the first arms and the length of the second arms can be reduced by the thickness of the nonwoven layer of fibers comprised in the three-dimensional geotextile material, in particular by the thickness of the bridging sections composed of the nonwoven layer of fibers comprised in the three-dimensional geotextile material, to enable that the three-dimensional geotextile material is wound at a constant outer diameter of the roll.

The winding apparatus comprises first arms and second arms which are configured to be reduced in length during winding of a roll of three-dimensional geotextile material. The first arms and the second arms may be configured to be reduced in length sequentially during winding of the roll of three-dimensional geotextile material, preferably upon completion of a winding. Upon completion of receiving (a row of) cell structures between first and second adjacent elongated strips, (a row of) cell structures will be received between the second and third adjacent elongated strips, and the first arms and second arms connected to the first elongated strip can already be reduced in length by the thickness of the nonwoven layer of fibers comprised in the three-dimensional geotextile material, in particular by the thickness of the bridging sections composed of the nonwoven layer of fibers comprised in the three-dimensional geotextile material, to enable that the three-dimensional geotextile material is wound at a constant outer diameter of the roll at improved control of the compression of the three-dimensional geotextile material upon reducing the diameter of the previous windings on the roll, as not all of the cell structures in the previous windings need to compress simultaneously. Upon completion of (a row of) receiving cell structures between a certain elongated strip and the subsequent adjacent elongated strip, the first arms and second arms connected to the certain elongated strip can already be reduced in length by the thickness of the nonwoven layer of fibers comprised in the three-dimensional geotextile material, in particular by the thickness of the bridging sections composed of the nonwoven layer of fibers comprised in the three-dimensional geotextile material. The time interval between the sequential reduction in length of the first arms and second arms connected to subsequent elongated strips will depend on the circumferential speed at the outer diameter of the roll and the spacing (interval) between the subsequent elongated strips.

The elongated strips may have a width of at least 1 m, preferably at least 2 m, or preferably at least 3 m, or preferably at least 4 m, to enable to provide a roll of three-dimensional geotextile material having a width of least 1 m, preferably at least 2 m, or preferably at least 3 m, or preferably at least 4 m.

The outer diameter of the roll during winding by the winding apparatus may be varied. The outer diameter of the roll during winding by the winding apparatus may be at least 1 m, preferably at least 1.25 m, or preferably at least 1.5 m, or preferably at least 2.0 m.

The winding apparatus may comprise a central axis between the first means for rotating and the second means for rotating, but preferably does not comprise a central axis between the first means for rotating and the second means for rotating.

The winding apparatus according to the invention may also be described as a winding apparatus for winding a roll of a three-dimensional geotextile material at a constant outer diameter of the roll, the roll of three-dimensional geotextile material having a (imaginary) central axis, the three-dimensional geotextile material comprising a multitude of cell structures, wherein the winding apparatus comprises elongated strips oriented parallel to the (imaginary) central axis of the roll of three-dimensional geotextile material, each elongated strip spaced from each adjacent elongated strip, preferably at regular intervals, for receiving the cell structures comprised in the three-dimensional geotextile material, wherein the elongated strips are spaced at a distance from the (imaginary) central axis, first arms oriented in a radial direction from the central axis to the elongated strips connecting the elongated strips to a first means for rotating the elongated strips and the first arms, and second arms oriented in a radial direction from the central axis to the elongated strips connecting the elongated strips to a second means for rotating the elongated strips and the second arms, wherein the first arms and the second are configured to be reduced in length during winding of the roll of three-dimensional geotextile material.

The winding apparatus comprises first arms and second arms which are configured to be reduced in length during winding of a roll of three-dimensional geotextile material. The first arms and second arms comprised in the winding apparatus may be configured to be reduced by any suitable system, but preferably by a hydraulic system, by an electrical motor or by a spring system.

The winding apparatus preferably comprises a means for cutting the three-dimensional geotextile material at the outer diameter of the roll. Upon finishing winding of the roll, the three-dimensional geotextile material at the outer diameter of the roll may be cut manually, preferably at the bridging sections composed of the nonwoven layer of fibers comprised in the three-dimensional geotextile material, which however constitutes a risk that the manual cut is made to a depth of penetration which exceeds the thickness of the three-dimensional geotextile material of the outermost winding of the roll, in particular exceeds the thickness of the bridging sections composed of the nonwoven layer of fibers comprised in the three-dimensional geotextile material, thereby damaging the three-dimensional geotextile material in the previous winding of the three-dimensional geotextile material on the roll. The means for cutting the three-dimensional geotextile material at the outer diameter of the roll may be any suitable means, for example be a sharp plate functioning as a knife, preferably having a length corresponding to the length of the elongated strips. The sharp plate functioning as a knife may advantageously be configured to be heated to a temperature at or above the melting temperature of fibers comprised in the nonwoven layer of fibers comprised in the three-dimensional geotextile material.

The winding apparatus comprises a first means for rotating and a second means for rotating, first arms, each first arm having a first endpoint and a second endpoint, the first endpoint of the first arms connected to the first means for rotating wherein the first arms extend in a radial direction from the first means for rotating, second arms, each second arm having a first endpoint and a second endpoint, the first endpoint of the second arms connected to the second means for rotating, wherein the second arms extend in a radial direction from the second means for rotating and elongated strips extending from the second endpoint of the first arms to the second endpoint of the second arms, each elongated strip spaced from each adjacent elongated strip. At least during the winding of a roll of a three-dimensional geotextile material, the elongated strips are connected to the second endpoint of the first arms and the second endpoint of the second arms. The second endpoint of the first arms or the second endpoint of the second arms are preferably releasably connected to the elongated strips extending from the second endpoint of the first arms to the second endpoint of the second arms to facilitate easier unloading of the roll of a three-dimensional geotextile material from the winding apparatus. Upon finishing winding of the roll, the length of the first arms and the length of the second arms may have been reduced by the cumulative thickness of the three-dimensional geotextile material in all windings of the roll, in particular by the cumulative thickness of the bridging sections composed of the nonwoven layer of fibers comprised in the three-dimensional geotextile material in all windings of the roll. In particular, the length of the first arms and the second arms may have been reduced by more than the cumulative thickness of the three-dimensional geotextile material in all windings of the roll, in particular by more than the cumulative thickness of the bridging sections composed of the nonwoven layer of fibers comprised in the three-dimensional geotextile material in all windings of the roll, which enables to retract the elongated strips to within the inner diameter of the roll of three-dimensional geotextile material defined by the first winding of the three-dimensional geotextile material, so that the roll can be unloaded from the winding apparatus. Although a workable solution is thereby provided, the length of the first arms and the length of the second arms may have to be reduced to a relatively large extend and/or the inner diameter of the roll of three-dimensional geotextile material may require a minimum size. In the winding apparatus, the second endpoint of the first arms or the second endpoint of the second arms are preferably releasably connected to the elongated strips extending from the second endpoint of the first arms to the second endpoint of the second arms to facilitate easier unloading of the roll of a three-dimensional geotextile material from the winding apparatus. When, for example, the second endpoint of the second arms are releasably connected to the elongated strips, the elongated strips, the first arms and the first means for rotating can be removed from the roll of three-dimensional geotextile material by sliding in the axial direction.

The second endpoint of the first arms or second endpoint of the second arms may be releasably connected to the elongated strips, wherein the second endpoint of the first arms or the second endpoint of the second arms comprise an orifice for receiving an end of the elongated strips, the orifice having an inner surface and wherein an inflatable material is located within the orifice at an interface between the inner surface of the orifice and the end of the elongated strip. The inflatable material may be any suitable inflatable material which is capable of providing sufficient friction between the inner surface of the orifice, comprised in the second endpoint of the first arms or the second endpoint of the second arms, and the end of the elongated strip to ensure that the elongated strip is securely connected to the first arm or the second arm. Preferably, the inflatable material is an inflatable rubber material.

The winding apparatus may comprise a means for taking up three-dimensional geotextile material after cutting the roll of three-dimensional geotextile material. After cutting the three-dimensional geotextile material at the outer diameter of the roll, the roll of three-dimensional geotextile material must be removed from the winder. The means for taking up three-dimensional geotextile material enables to take up the three-dimensional geotextile material can collect the three-dimensional geotextile material during the time required to remove the previous roll of three-dimensional geotextile material and to prepare the winding apparatus for winding the next roll of three-dimensional geotextile material, e.g. by reconnecting the second endpoint of the first arms or the second endpoint of the second arms to the elongated strips and to set the length of the first arms and the second arms to the initial length.

The winding apparatus enables to provide a roll of three-dimensional geotextile material having an acceptable length of the three-dimensional geotextile material, in particular at an acceptable roll diameter. The winding apparatus also enables to provide a roll of three-dimensional geotextile composite material comprising a three-dimensional geotextile and a geogrid connected to the three-dimensional geotextile material, the roll having an acceptable length of the three-dimensional geotextile composite material, in particular at an acceptable roll diameter, provided that the three-dimensional geotextile composite material does not comprise a geogrid connected to the outer surface of the base of the cell structures comprised in the three-dimensional geotextile material. Such three-dimensional geotextile composite materials comprising a geogrid connected to the outer surface of the base of the cell structures comprised in the three-dimensional geotextile material (schematically illustrated in Figure 4C and 4D and Figures 16 and 17) can not be efficiently wound by the winding apparatus as such three-dimensional geotextile composite materials have a high flexural stiffness and can not be easily bent.

The winding apparatus enables to provide a roll of three-dimensional geotextile composite material, wherein a geogrid is connected to the first surface of the bridging sections comprised in the three-dimensional geotextile material, wherein a geogrid is connected to the second surface of the bridging sections comprised in the three-dimensional geotextile material (as schematically illustrated in Figure 3) and/or wherein a geogrid is sandwiched between the second surface of the bridging sections comprised in the three-dimensional geotextile and the first surface of the bridging sections comprised in a second three-dimensional geotextile material (as schematically illustrated in Figure 18B), provided that the three-dimensional geotextile composite material does not comprise a geogrid connected to the outer surface of the base of the cell structures comprised in the three-dimensional geotextile material.

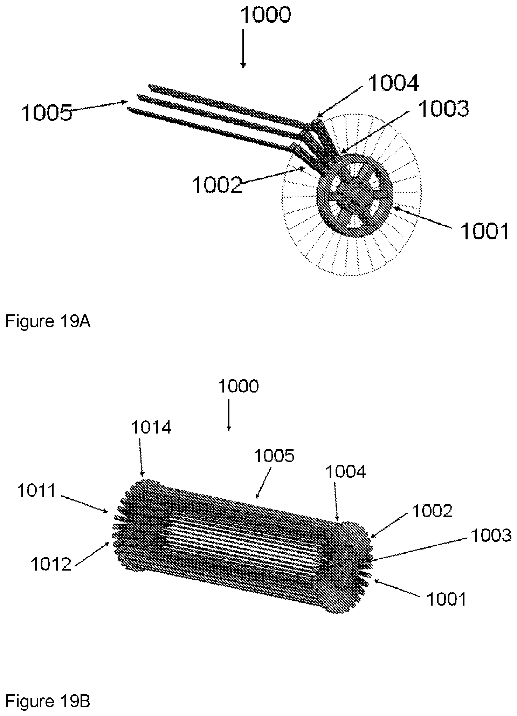

Figure 19A schematically illustrates some of the main features of the winding apparatus (1000), in particular illustrating a first means for rotating (1001), first arms (1002), each first arm having a first endpoint (1003) and a second endpoint (1004), the first endpoint (1003) of the first arms (1002) connected to the first means for rotating (1001), wherein the first arms (1002) extend in a radial direction from the first means for rotating (1001), and elongated strips (1005) extending from the second endpoint (1004) of the first arms to the second endpoint of the second arms (not shown), each elongated strip spaced from each adjacent elongated strip for receiving the cell structures comprised in the three-dimensional geotextile material, wherein the first arms (1002) are configured to be reduced in length during winding of the roll of three-dimensional geotextile material. Only a few of the elongated strips (1005) and a few of the first arms (1002) are shown for convenience.

Figure 19B schematically illustrates more completely, the main features of the winding apparatus (1000) of Figure 19A, illustrating a first means for rotating (1001) and a second means for rotating (1011), first arms (1002), each first arm having a first endpoint (1003) and a second endpoint (1004), the first endpoint (1003) of the first arms (1002) connected to the first means for rotating (1001), second arms (1012), each second arm having a first endpoint and a second endpoint (1014), the first endpoint of the second arms (1012) connected to the second means for rotating (1011), and elongated strips (1005) extending from the second endpoint (1004) of the first arms to the second endpoint of the second arms (1014), each elongated strip spaced from each adjacent elongated strip for receiving the cell structures comprised in the three-dimensional geotextile material, wherein the first arms (1002) and the second arms (1012) are configured to be reduced in length during winding of the roll of three-dimensional geotextile material.

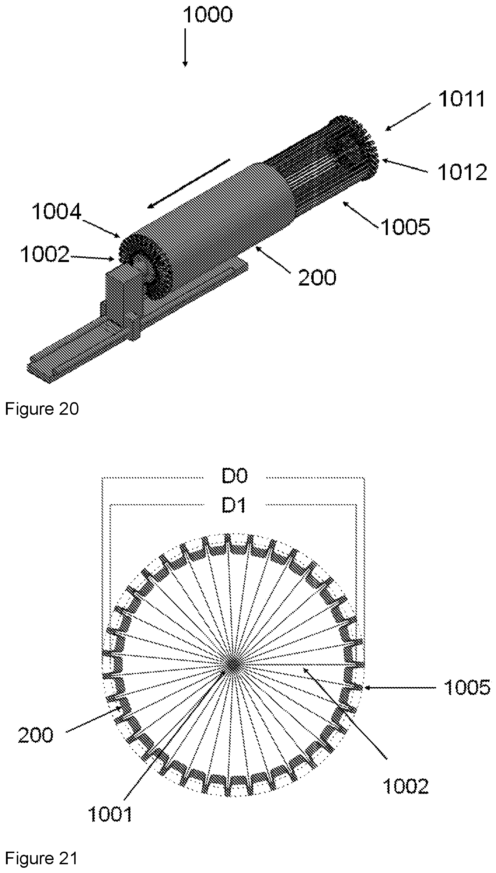

Figure 20 schematically illustrates a winding apparatus (1000) according to the invention comprising a roll of three-dimensional geotextile material (200) after finishing winding of the roll, wherein the connections of the second endpoint (1004) of the first arms (1002) to the elongated strips (1005) are released, so that the elongated strips (1005), the second arms (1012) and the second means for rotating (1011) can be removed from the roll of three-dimensional geotextile material by sliding in the axial direction.

Figure 20 schematically illustrates a side view of a winding apparatus according to the invention including a roll of three-dimensional geotextile material. The winding apparatus comprises a first means for rotating (1001), first arms (1002) extending in a radial direction from the first means for rotating (1001) and elongated strips (1005) at the second endpoint of the first arms (1002). The roll on the winding apparatus comprises multiple windings of three-dimensional geotextile material (200). At the start of winding the three-dimensional geotextile material (200) on the winding apparatus the first arms (1005) are set to a length such that the starting diameter (D0) of the winding apparatus is set to a specified value. Upon winding of the three-dimensional geotextile material, the first arms (1005) are reduced in length. Upon finishing of winding of the three-dimensional geotextile material, the first arms (1005) have been reduced in length such that the final diameter (D1) corresponds to the starting diameter (D0) minus two times the cumulative thickness of the three-dimensional geotextile material in all windings of the roll, in particular by more than the cumulative thickness of the bridging sections composed of the nonwoven layer of fibers comprised in the three-dimensional geotextile material in all windings of the roll.

**Claims**

1. A winding apparatus (1000) for winding a roll of a three-dimensional geotextile material at a constant outer diameter of the roll, the three-dimensional geotextile material comprising a multitude of cell structures, the winding apparatus comprising a first means for rotating (1001) and a second means for rotating (1011), first arms (1002), each first arm having a first endpoint (1003) and a second endpoint (1004), the first endpoint (1003) of the first arms (1002) connected to the first means for rotating (1001), wherein the first arms (1002) extend in a radial direction from the first means for rotating (1001), second arms (1012), each second arm having a first endpoint (1013) and a second endpoint, the first endpoint (1013) of the second arms (1012) connected to the second means for rotating (1011), wherein the second arms (1012) extend in a radial direction from the second means for rotating (1011), and elongated strips (1005) extending from the second endpoint (1004) of the first arms (1002) to the second endpoint of the second arms (1012), each elongated strip (1005) spaced from each adjacent elongated strip (1005) for receiving the cell structures comprised in the three-dimensional geotextile material, wherein the first arms (1002) and the second arms (1012) are configured to be reduced in length during winding of the roll of three-dimensional geotextile material, **characterised in that** the first arms (1002) and the second arms (1012) are configured to be reduced in length sequentially during winding of the roll of three-dimensional geotextile material.

2. The winding apparatus for winding a roll of a three-dimensional geotextile material at a constant outer diameter of the roll according to claim 1, wherein each elongated strip (1005) spaced from each adjacent elongated strip (1005) at regular intervals.

3. The winding apparatus for winding a roll of a three-dimensional geotextile material at a constant outer diameter of the roll according to any one or more of claims 1 to 2, wherein the elongated strips (1005) have a width which is configured to be equal to or less than the width of bridging sections composed of the nonwoven layer of fibers between the openings of the cell structures connecting side walls of adjacent cell structures comprised in the three-dimensional geotextile material.

4. The winding apparatus for winding a roll of a three-dimensional geotextile material at a constant outer diameter of the roll according to claim 3, wherein the elongated strips (1005) have a width between 10 mm and 30 mm.

5. The winding apparatus for winding a roll of a three-dimensional geotextile material at a constant outer diameter of the roll according to any one or more of claims 1 to 4, wherein the length of the first arms (1002) and the length of the second arms (1012) are configured to be reduced by a hydraulic system.

6. The winding apparatus for winding a roll of a three-dimensional geotextile material at a constant outer diameter of the roll according to any one or more of claims 1 to 4, wherein the length of the first arms (1002) and the length of the second arms (1012) are configured to be reduced by an electrical motor or by a spring system.

7. The winding apparatus for winding a roll of a three-dimensional geotextile material at a constant outer diameter of the roll according to any one or more of the previous claims, comprising a means for cutting the three-dimensional geotextile material at the outer diameter of the roll.

8. The winding apparatus for winding a roll of a three-dimensional geotextile material at a constant outer diameter of the roll according to claim 7, comprising a means for limiting a depth of penetration of the cutting means into the three-dimensional geotextile material.

9. The winding apparatus for winding a roll of a three-dimensional geotextile material at a constant outer diameter of the roll according to claim 8, wherein the means for limiting the depth of penetration of the cutting means is configured to be heated to a temperature at or above the melting temperature of fibers comprised in the nonwoven layer of fibers comprised in the three-dimensional geotextile material.

10. The winding apparatus for winding a roll of a three-dimensional geotextile material at a constant outer diameter of the roll according to any one or more of the previous claims, wherein the second endpoint (1004) of the first arms (1002) or the second endpoint (1014) of the second arms (1012) are releasably connected to the elongated strips (1005) extending from the second endpoint (1004) of the first arms (1002) to the second endpoint (1014) of the second arms (1012).

11. The winding apparatus for winding a roll of a three-dimensional geotextile material at a constant outer diameter of the roll according to claim 10, wherein the second endpoint (1004) of the first arms (1002) or the second endpoint (1014) of the second arms (1012) comprise an orifice for receiving an end of the elongated strips, the orifice having an inner surface and wherein an inflatable material is located within the orifice at an interface between the inner surface of the orifice and the end of the elongated strip (1005).

12. The winding apparatus for winding a roll of a three-dimensional geotextile material at a constant outer diameter of the roll three-dimensional geotextile material according to any one or more of claims 7 to 9, comprising a means for taking up the three-dimensional geotextile material after cutting the roll of three-dimensional geotextile material.

**Patentansprüche**

1. Eine Wickelvorrichtung (1000) zum Wickeln einer Rolle aus einem dreidimensionalen Geotextilmaterial bei einem konstanten Außendurchmesser der Rolle, wobei das dreidimensionale Geotextilmaterial eine Vielzahl von Zellstrukturen umfasst, wobei die Wickelvorrichtung ein erstes Mittel zum Drehen (1001) und ein zweites Mittel zum Drehen (1011), erste Arme (1002), wobei jeder erste Arm einen ersten Endpunkt (1003) und einen zweiten Endpunkt (1004) aufweist, wobei der erste Endpunkt (1003) der ersten Arme (1002) mit dem ersten Mittel zum Drehen (1001) verbunden ist, wobei sich die ersten Arme (1002) in einer radialen Richtung von dem ersten Mittel zum Drehen (1001) erstrecken, zweite Arme (1012), wobei jeder zweite Arm einen ersten Endpunkt (1013) und einen zweiten Endpunkt aufweist, wobei der erste Endpunkt (1013) der zweiten Arme (1012) mit dem zweiten Mittel zum Drehen (1011) verbunden ist, wobei sich die zweiten Arme (1012) in einer radialen Richtung von dem zweiten Mittel zum Drehen (1011) erstrecken, und längliche Streifen (1005), die sich vom zweiten Endpunkt (1004) der ersten Arme (1002) zum zweiten Endpunkt der zweiten Arme (1012) erstrecken, wobei jeder längliche Streifen (1005) von jedem benachbarten länglichen Streifen (1005) beabstandet ist, um die im dreidimensionalen Geotextilmaterial enthaltenen Zellstrukturen aufzunehmen, wobei die ersten Arme (1002) und die zweiten Arme (1012) so konfiguriert sind, dass sie während des Wickelns der Rolle aus dreidimensionalem Geotextilmaterial in der Länge reduziert werden, **dadurch gekennzeichnet, dass** die ersten Arme (1002) und die zweiten Arme (1012) so konfiguriert sind, dass sie während des Wickelns der Rolle aus dreidimensionalem Geotextilmaterial sequentiell in der Länge reduziert werden.

2. Die Wickelvorrichtung zum Wickeln einer Rolle aus einem dreidimensionalen Geotextilmaterial bei einem konstanten Außendurchmesser der Rolle nach Anspruch 1, wobei jeder längliche Streifen (1005) von jedem benachbarten länglichen Streifen (1005) in regelmäßigen Abständen beabstandet ist.

3. Die Wickelvorrichtung zum Wickeln einer Rolle aus einem dreidimensionalen Geotextilmaterial bei einem konstanten Außendurchmesser der Rolle nach einem oder mehreren der Ansprüche 1 bis 2, wobei die länglichen Streifen (1005) eine Breite aufweisen, die so konfiguriert ist, dass sie gleich oder geringer ist als die Breite von Überbrückungsabschnitten, die aus der Vliesfaserschicht zwischen den Öffnungen der Zellstrukturen bestehen, welche Seitenwände benachbarter Zellstrukturen verbinden, die im dreidimensionalen Geotextilmaterial enthalten sind.

**4.** Die Wickelvorrichtung zum Wickeln einer Rolle aus einem dreidimensionalen Geotextilmaterial bei einem konstanten Außendurchmesser der Rolle nach Anspruch 3, wobei die länglichen Streifen (1005) eine Breite zwischen 10 mm und 30 mm aufweisen.

**5.** Die Wickelvorrichtung zum Wickeln einer Rolle aus einem dreidimensionalen Geotextilmaterial bei einem konstanten Außendurchmesser der Rolle nach einem oder mehreren der Ansprüche 1 bis 4, wobei die Länge der ersten Arme (1002) und die Länge der zweiten Arme (1012) so konfiguriert sind, dass sie durch ein hydraulisches System reduziert werden.

**6.** Die Wickelvorrichtung zum Wickeln einer Rolle aus einem dreidimensionalen Geotextilmaterial bei einem konstanten Außendurchmesser der Rolle nach einem oder mehreren der Ansprüche 1 bis 4, wobei die Länge der ersten Arme (1002) und die Länge der zweiten Arme (1012) so konfiguriert sind, dass sie durch einen Elektromotor oder durch ein Federsystem reduziert werden.

**7.** Die Wickelvorrichtung zum Wickeln einer Rolle aus einem dreidimensionalen Geotextilmaterial bei einem konstanten Außendurchmesser der Rolle nach einem oder mehreren der vorhergehenden Ansprüche, umfassend ein Mittel zum Schneiden des dreidimensionalen Geotextilmaterials am Außendurchmesser der Rolle.

**8.** Die Wickelvorrichtung zum Wickeln einer Rolle aus einem dreidimensionalen Geotextilmaterial bei einem konstanten Außendurchmesser der Rolle nach Anspruch 7, umfassend ein Mittel zur Begrenzung einer Eindringtiefe des Schneidmittels in das dreidimensionale Geotextilmaterial.

**9.** Die Wickelvorrichtung zum Wickeln einer Rolle aus einem dreidimensionalen Geotextilmaterial bei einem konstanten Außendurchmesser der Rolle nach Anspruch 8, wobei das Mittel zur Begrenzung der Eindringtiefe des Schneidmittels so konfiguriert ist, dass es auf eine Temperatur bei oder über der Schmelztemperatur von Fasern erhitzt wird, die in der Vliesfaserschicht des dreidimensionalen Geotextilmaterials enthalten sind.

**10.** Die Wickelvorrichtung zum Wickeln einer Rolle aus einem dreidimensionalen Geotextilmaterial bei einem konstanten Außendurchmesser der Rolle nach einem oder mehreren der vorhergehenden Ansprüche, wobei der zweite Endpunkt (1004) der ersten Arme (1002) oder der zweite Endpunkt (1014) der zweiten Arme (1012) lösbar mit den länglichen Streifen (1005) verbunden sind, die sich vom zweiten Endpunkt (1004) der ersten Arme (1002) zum zweiten Endpunkt (1014) der zweiten Arme (1012) erstrecken.

**11.** Die Wickelvorrichtung zum Wickeln einer Rolle aus einem dreidimensionalen Geotextilmaterial bei einem konstanten Außendurchmesser der Rolle nach Anspruch 10, wobei der zweite Endpunkt (1004) der ersten Arme (1002) oder der zweite Endpunkt (1014) der zweiten Arme (1012) eine Öffnung zur Aufnahme eines Endes der länglichen Streifen umfassen, wobei die Öffnung eine Innenfläche aufweist und wobei ein aufblasbares Material innerhalb der Öffnung an einer Grenzfläche zwischen der Innenfläche der Öffnung und dem Ende des länglichen Streifens (1005) angeordnet ist.

**12.** Die Wickelvorrichtung zum Wickeln einer Rolle aus einem dreidimensionalen Geotextilmaterial bei einem konstanten Außendurchmesser der Rolle nach einem oder mehreren der Ansprüche 7 bis 9, umfassend ein Mittel zur Aufnahme des dreidimensionalen Geotextilmaterials nach dem Schneiden der Rolle aus dreidimensionalem Geotextilmaterial.

## Revendications

**1.** Un appareil d'enroulement (1000) pour enrouler un rouleau d'un matériau géotextile tridimensionnel à un diamètre extérieur constant du rouleau, le matériau géotextile tridimensionnel comprenant une multitude de structures cellulaires, l'appareil d'enroulement comprenant un premier moyen de rotation (1001) et un second moyen de rotation (1011), des premiers bras (1002), chaque premier bras ayant une première extrémité (1003) et une seconde extrémité (1004), la première extrémité (1003) des premiers bras (1002) étant connectée au premier moyen de rotation (1001), dans lequel les premiers bras (1002) s'étendent dans une direction radiale à partir du premier moyen de rotation (1001), des seconds bras (1012), chaque second bras ayant une première extrémité (1013) et une seconde extrémité, la première extrémité (1013) des seconds bras (1012) étant connectée au second moyen de rotation (1011), dans lequel les seconds bras (1012) s'étendent dans une direction radiale à partir du second moyen de rotation (1011), et des bandes allongées (1005) s'étendant de la seconde extrémité (1004) des premiers bras (1002) à la seconde extrémité des seconds bras (1012), chaque bande allongée (1005) étant espacée de chaque bande allongée adjacente (1005) pour recevoir les structures cellulaires comprises dans le matériau géotextile tridimensionnel, dans lequel les premiers bras (1002) et les seconds bras (1012) sont configurés pour être réduits en longueur pendant l'enroulement du rouleau de matériau géotextile tridimensionnel, **caractérisé en ce que** les premiers bras (1002) et les seconds bras (1012) sont configurés pour être réduits en longueur séquentiellement pendant l'enroulement du rouleau de matériau géotextile tridimensionnel.

2. L'appareil d'enroulement pour enrouler un rouleau d'un matériau géotextile tridimensionnel à un diamètre extérieur constant du rouleau selon la revendication 1, dans lequel chaque bande allongée (1005) est espacée de chaque bande allongée adjacente (1005) à des intervalles réguliers.

3. L'appareil d'enroulement pour enrouler un rouleau d'un matériau géotextile tridimensionnel à un diamètre extérieur constant du rouleau selon l'une ou plusieurs des revendications 1 à 2, dans lequel les bandes allongées (1005) ont une largeur qui est configurée pour être égale ou inférieure à la largeur des sections de pontage composées de la couche non tissée de fibres entre les ouvertures des structures cellulaires reliant les parois latérales des structures cellulaires adjacentes comprises dans le matériau géotextile tridimensionnel.

4. L'appareil d'enroulement pour enrouler un rouleau d'un matériau géotextile tridimensionnel à un diamètre extérieur constant du rouleau selon la revendication 3, dans lequel les bandes allongées (1005) ont une largeur comprise entre 10 mm et 30 mm.

5. L'appareil d'enroulement pour enrouler un rouleau d'un matériau géotextile tridimensionnel à un diamètre extérieur constant du rouleau selon l'une ou plusieurs des revendications 1 à 4, dans lequel la longueur des premiers bras (1002) et la longueur des seconds bras (1012) sont configurées pour être réduites par un système hydraulique.

6. L'appareil d'enroulement pour enrouler un rouleau d'un matériau géotextile tridimensionnel à un diamètre extérieur constant du rouleau selon l'une ou plusieurs des revendications 1 à 4, dans lequel la longueur des premiers bras (1002) et la longueur des seconds bras (1012) sont configurées pour être réduites par un moteur électrique ou par un système à ressort.

7. L'appareil d'enroulement pour enrouler un rouleau d'un matériau géotextile tridimensionnel à un diamètre extérieur constant du rouleau selon l'une ou plusieurs des revendications précédentes, comprenant un moyen de coupe du matériau géotextile tridimensionnel au diamètre extérieur du rouleau.

8. L'appareil d'enroulement pour enrouler un rouleau d'un matériau géotextile tridimensionnel à un diamètre extérieur constant du rouleau selon la revendication 7, comprenant un moyen pour limiter une profondeur de pénétration du moyen de coupe dans le matériau géotextile tridimensionnel.

9. L'appareil d'enroulement pour enrouler un rouleau d'un matériau géotextile tridimensionnel à un diamètre extérieur constant du rouleau selon la revendication 8, dans lequel le moyen pour limiter la profondeur de pénétration du moyen de coupe est configuré pour être chauffé à une température égale ou supérieure à la température de fusion des fibres comprises dans la couche non tissée de fibres du matériau géotextile tridimensionnel.

10. L'appareil d'enroulement pour enrouler un rouleau d'un matériau géotextile tridimensionnel à un diamètre extérieur constant du rouleau selon l'une ou plusieurs des revendications précédentes, dans lequel la seconde extrémité (1004) des premiers bras (1002) ou la seconde extrémité (1014) des seconds bras (1012) sont connectées de manière amovible aux bandes allongées (1005) s'étendant de la seconde extrémité (1004) des premiers bras (1002) à la seconde extrémité (1014) des seconds bras (1012).

11. L'appareil d'enroulement pour enrouler un rouleau d'un matériau géotextile tridimensionnel à un diamètre extérieur constant du rouleau selon la revendication 10, dans lequel la seconde extrémité (1004) des premiers bras (1002) ou la seconde extrémité (1014) des seconds bras (1012) comprennent un orifice pour recevoir une extrémité des bandes allongées, l'orifice ayant une surface intérieure et dans lequel un matériau gonflable est situé à l'intérieur de l'orifice à une interface entre la surface intérieure de l'orifice et l'extrémité de la bande allongée (1005).

12. L'appareil d'enroulement pour enrouler un rouleau d'un matériau géotextile tridimensionnel à un diamètre extérieur constant du rouleau selon l'une ou plusieurs des revendications 7 à 9, comprenant un moyen pour réceptionner le matériau géotextile tridimensionnel après avoir coupé le rouleau de matériau géotextile tridimensionnel.

Figure 1A

Figure 1B

Figure 1C

Figure 2A

Figure 2B

Figure 2C

Figure 3

Figure 4A

Figure 4B

Figure 4C

Figure 4D

Figure 5

Figure 6

Figure 7A

Figure 7B

Figure 8

13 →

14

Figure 9

1, 2

13

13

13

13

Figure 10

Figure 11

Figure 12A

Figure 12B

Figure 12C

Figure 12D

Figure 12E

Figure 12F

Figure 12G

Figure 13A

Figure 13B

Figure 13C

Figure 13D

Figure 13E

Figure 13F

Figure 13G

Figure 14

Figure 15

Figure 16

Figure 17

Figure 18A

Figure 18B

Figure 19A

Figure 19B

Figure 20

Figure 21

Figure 22

Figure 23

700

W1

L0

Figure 24A

700

W1

L0

Figure 24B

Figure 25